# EUROPEAN PATENT SPECIFICATION

(11) **EP 2 959 139 B1**
(45) Date of publication and mention of the grant of the patent: **19.08.2020**
(21) Application number: 13707751.7
(22) Date of filing: 15.02.2013
(51) Int. Cl.: F02C 9/28, F02C 9/34

(54) **OPTIMIZATION OF GAS TURBINE COMBUSTION SYSTEMS LOW LOAD PERFORMANCE ON SIMPLE CYCLE AND HEAT RECOVERY STEAM GENERATOR APPLICATIONS**
OPTIMIERUNG VON GASTURBINENVERBRENNUNGSSYSTEMEN MIT SCHWACHER LADELEISTUNG IN EINEM EINFACHEN KREISLAUF UND WÄRMERÜCKGEWINNUNGS-DAMPFERZEUGERANWENDUNGEN
OPTIMISATION DES PERFORMANCES À FAIBLE CHARGE DE SYSTÈMES DE COMBUSTION DE TURBINE À GAZ SUR SIMPLE CYCLE ET APPLICATIONS DE GÉNÉRATEUR DE VAPEUR À RÉCUPÉRATION DE CHALEUR

(30) Priority: 22.02.2012 US 201261601876 P; 05.07.2012 US 201213542222
(43) Date of publication of application: 30.12.2015
(60) Divisional application: 20185238.1
(73) Proprietor: Gas Turbine Efficiency Sweden AB, 175 27 Järfälla (SE); Chandler, Christopher, Austin, TX 78739 (US)
(72) Inventor: CHANDLER, Christopher, Austin, TX 78739 (US)
(74) Representative: Epping - Hermann - Fischer
(86) International application number: PCT/US2013/026295
(87) International publication number: WO 2013/126279

(56) References cited:
- EP-A2- 1 909 032
- US-A- 4 333 310
- US-A- 5 319 936
- US-A1- 2006 040 225
- US-A1- 2007 163 267
- US-A1- 2008 289 314
- US-A1- 2009 126 367
- US-A1- 2010 077 970
- US-A1- 2010 286 890
- US-A1- 2011 056 181
- US-A1- 2011 265 487

## Description

### Cross-Reference to Related Applications

This application is a continuation-in-part of US Application Serial No, 13/542,222, filed on July 5, 2012, which is a continuation-in-part of US Application Serial No. 12/463,060 filed on May 8, 2009. This application also claims the benefit of US Application Serial No, 61/601,876, filed on February 22, 2012.

### Technical Field

The present disclosure relates to an automated system to sense the operating condition of a combustion system and to make preset adjustments to achieve desired operation of the turbine thru out an optimized load range.

### Background

Lean premixed combustion systems have been deployed on land based gas turbine engines to reduce emissions, such as NOx and CO. These systems have been successful and, in some cases, produce emission levels that are at the lower limits of measurement capabilities, approximately 1 to 3 parts per million (ppm) of NOx and CO. Although these systems are a great benefit from a standpoint of emission production, the operational envelope of the systems is substantially reduced when compared to more conventional combustion systems, As a consequence, the control of fuel conditions, distribution and injection into the combustion zones has become a critical operating parameter and requires frequent adjustment, when ambient atmospheric conditions, such as temperature, humidity and pressure, change, The re-adjustment of the combustion fuel conditions, distribution and injection is termed tuning.

Controlled operation of a combustion system generally employs a manual setting of the operational control elements of a combustor to yield an average operational condition, These settings may be input through a controller, which as used herein shall refer to any device used to control the operation of a system, Examples include a Distributed Control System (DCS), a fuel turbine controller, a programmable logical controller (PLC), a stand-alone computer with communication to another controller and/or directly to a system,

These settings are satisfactory at the time of the setup, but conditions may change and cause unacceptable operation in a matter of hours or days, Tuning issues are any situation whereby any operational parameters of a system are in excess of acceptable limits, Examples include emissions excursion outside of allowable limits, combustor dynamics excursion outside of allowable limits, or any other tuning event requiring adjustment of a turbine's operational control elements, Other approaches use a formula to predict emissions based on gas turbine's operating settings and select a set point for fuel distribution and/or overall machine fuel/air ratio, without modifying other control elements, such as fuel gas temperature, Still other approaches employ a remote connection to the site by tuning experts, that will periodically readjust the tune, from the remote location, These approaches do not allow for continuous timely variation, do not comprehensively take advantage of actual dynamics and emission data or do not modify fuel distribution, fuel temperature and/or other turbine control elements,

Another variable that impacts the lean premixed combustion system is fuel composition, Sufficient variation in fuel composition will cause a change in the heat release of the lean premixed combustion system. Such change may lead to emissions excursions, unstable combustion processes, or even blow out of the combustion system,

In recent years, over-capacity of power generation, even that using F-class firing temperature gas turbines, has resulted in much of the installed gas turbine fleet running in a cyclic mode versus baseload operation, This means that many gas turbine operators are forced to shut their equipment down overnight, when power prices are so low that the losses incurred running overnight far outweigh the costs of starting the equipment every morning, This operation process has an impact on the maintenance of the equipment as each stop / start cycle causes a resulting load cycle on the equipment.

To combat this situation, gas turbine operators are investigating ways of running their equipment overnight while incurring the smallest economic loss possible. One viable solution is to lower the minimum load a gas turbine can achieve while still maintaining acceptable emissions levels, This method of operation is commonly referred to as "Turndown."

"Turndown" has been used within the power generation industry for many years, As such, nothing directly related to this mode of operation is included as part of this patent, What is novel is the approach used by the ECOMAX™ tuning controller to tune the combustion system while in turndown, as well as the method incorporated within ECOMAX™ to mitigate detrimental effects on the combined-cycle heat recovery steam generator (HRSG) caused by low steam flows and high gas turbine exhaust temperatures, The system is also applicable to simple. cycle operation; however, most simple cycle systems are applied to peak power generation and have a desirable shut - down process in the operating plan.

Often, as gas turbine loads are reduced, HRSG steam flows reduce while gas turbine exhaust temperatures rise. This combination, in conjunction with inadequate intra-stage attemperation flow capacity, often results in excessively high HRSG outlet steam temperatures (steam turbine inlet steam temperatures). In many cases these steam temperatures approach material limitations and can lead to pre-mature component failure. On the other extreme, steam conditioning / attemperation systems with adequate condensate flows can provide enough condensate to keep the superheat outlet temperature within specifications at the point of entrance into a steam turbine; however, localized over-attemperation can occur. This over-attemperation often leads to condensate impacting directly on steam piping downstream of the attemperator, causing excessive thermal fatigue in the piping sections immediately downstream of desuperheaters / attemperators.

To date efforts have focused on manually (if at all) modifying a gas turbine's fuel-to-air (f/a) ratio to keep the HRSG design constraints satisfied, However, factors such as ambient temperature changes, turbine component degradation, etc., can necessitate periodic manipulation of the gas turbine's f/a ratio, at low loads, to ensure acceptable HRSG inlet conditions, Automated manipulation of the f/a ratio of a gas turbine utilizing real-time HRSG operational information, as well as real-time gas turbine operational information, provides an efficient means to maximize HRSG component life.

It is understood that manipulation of a gas turbine's fuel-air ratio will directly affect the engine's "tune", and as such any approach to accomplish this must be accompanied by another automated turbine control scheme to "re-tune" the turbine as-needed.

Mis-operation of the combustion system manifests itself in augmented pressure pulsations or increasing of combustion dynamics, Pulsations can have sufficient force to destroy the combustion system and dramatically reduce the life of combustion hardware. Additionally, improper tuning of the combustion system can lead to emission excursions and violate emission permits. Therefore, a means to maintain the stability of the lean premixed combustion systems, on a regular or periodic basis, within the proper operating envelope, is of great value and interest to the industry, Additionally, a system that operates by utilizing near real-time data, taken from the turbine and HRSG sensors, would have significant value to coordinate modulation of fuel composition, fuel distribution, fuel gas inlet temperature, and/or overall machine f/a ratio (HRSG inlet temperature and airflow).

US Patent Publication No. 2011/0056181 is generally directed to control systems and methods for controlling a load point of a gas turbine engine. The control system includes a controller that receives a temperature signal and a pressure signal associated with exhaust gases from the gas turbine engine.

US Patent Publication No. 2010/0286890 is generally directed to a system for tuning the operation of a gas turbine based on measuring operational parameters of the turbine and directing adjustment of the operational controls for various operational elements of the turbine.

US Patent No. 5,319,936 is generally directed to combustor systems and turbine systems for stabilizing a premixed flame having first and second premixed burners having annular injection slots are concentrically adjacent and the injection slots are substantially aligned with each other in a longitudinal direction of the burners.

US Patent Publication No. 2008/0289314 is generally directed to a fuel delivery system for a gas turbine engine includes one or more subsets of combustors, and at least two fuel manifolds including a fuel manifold coupled to each combustor subset and configured to deliver fuel to only the subset of combustors during a predetermined gas turbine engine operating mode.

US Patent No. 4,333,310 is generally directed to a combined cycle electric power plant includes gas and steam turbines and a steam generator for recovering the heat in the exhaust gases exited from the gas turbine and for using the recovered heat to produce and supply steam to the steam turbine.

US Patent Publication No. 2007/0163267 is generally directed to a combustor for a gas turbine, the combustor including a burner system and a fuel supply system. A sensing system measures pressure pulsation values and/or emission values for each burner group. US Patent Publication No. 2006/0040225 is generally directed to a method for operating a furnace with a multi-burner system for generating hot gas, particularly a gas turbine, preferably of a power plant, comprising a combustion chamber with at least one burner. EP Patent Publication No. 1909032 is generally directed to a method of reducing emissions in a gas turbine engine including generating a swirling flow with a first oxygen source and a first fuel within a combustor, combusting the first fuel using the first oxygen source to produce combustion products within the combustor, generating a swirling flow with a second oxygen source and a second fuel and mixing with the combustion products, combusting the second fuel using the second oxygen source to produce second combustion products within the combustor, and generating a swirling flow with a third oxygen source and a third fuel and mixing with the second combustion products.

US Patent Publication No. 2011/0265487 is generally directed to tuning processes implemented by an auto-tune controller for measuring and adjusting the combustion dynamics and the emission composition of a gas turbine (GT) engine via a tuning process. US Patent Publication No. 2009/0126367 is generally directed to a gas turbine combustion system for a turbine engine that may include a plurality of combustor baskets positioned circumferentially about a longitudinal axis of the turbine engine, at least one firing nozzle extending into each of the plurality of combustor baskets and a fuel delivery system in communication with each of the at least one firing nozzles and in communication with at least one fuel source.

US Patent Publication No. 2010/0077970 is generally directed to systems and methods for controlling exhaust steam temperatures from a finishing superheater. The system may include a controller which includes control logic for predicting an exhaust temperature of steam from the finishing superheater using model-based predictive techniques.

### Summary

Provided herein is a system according to claim 1, a system according to claim 12, a method according to claim 14 and methods according to claims 16 or 19 for tuning the operation of a turbine and optimizing the mechanical life of a heat recovery steam generator, Provided therewith is a turbine controller, sensor means for sensing operational parameters, control means for adjusting operational control elements, The controller is adapted to tune the operation of the gas turbine in accordance preprogrammed steps in response to operational priorities selected by a user, The operational priorities preferably comprise optimal heat recovery steam generator life,

The present disclosure provides a controller and method for optimizing the fuel-air ratio of a gas-turbine combustor toward mitigating the detrimental effects of the turbine's exhaust conditions on the expected life of a Heat Recovery Steam Generator (HRSG) system, especially during low-load conditions, The gas turbine consumption system is of the type having sensor means for measuring operational parameters of the turbine and control means for controlling various operational elements of the turbine, The operational parameters of the turbine which are received by the controller include combustor dynamics, turbine exhaust temperature (overall fuel/air ratio), turbine exhaust emissions, and various heat recovery steam generator (HRSG) steam conditions, The operational control elements may include the fuel gas blend ratio (ratio of non-pipeline quality fuel gas to pipeline quality fuel gas), fuel distribution within the combustion system, fuel temperature and turbine exhaust temperature, The turbine/power plant system can also include a distributed control system (DCS) communicating with the sensor means and the control means, The tuning controller is normally connected to the turbine system through the DCS (although the tuning controller can connect directly to the gas turbine controller),

The tuning controller operates by receiving data from the sensor means, Operational priorities for the turbine are set within the controller and are typically selected from optimum NOx emissions, optimum power output, optimum combustor dynamics, optimum fuel gas blend ratio, and / or optimum HRSG life, The data received from the turbine sensors is compared to stored operational standards within the controller, The selected operational standards are based on the set operational priorities. A determination is made as to whether the turbine operation conforms to the operational standards, In addition, upon the data being out of conformance, a determination is made of the dominant tuning criteria again based on the preset operational priorities, Once the logical determinations are made, the tuning controller communicates with the operational control means through the DCS to perform a selected adjustment in an operational parameter of the turbine, The selected operational adjustment is based on the dominant tuning criteria and has a preset fixed incremental value and defined value range. Each incremental change is input over a set period of time, which is sufficient for the turbine to gain operational stability, Once the time period passes, operational data is again received from the turbine sensor means to determine if an additional incremental change is desired. Generally speaking, upon completing the adjustments within the defined range, a further operational parameter adjustment is selected, again based on the dominant tuning criteria, and a further fixed incremental adjustment is made within a defined range and over a set period of time, The tuning process continues by the controller receiving operational data to determine if the operation is conforming to the operational standards or whether an additional incremental adjustment is required. The operational parameters being adjusted by the tuning controller are preferably the fuel/air ratio within the gas turbine, the combustor fuel distribution split within the nozzles of the combustor, the fuel gas inlet temperature, and/or the fuel gas blend ratio.

It is understood that the tuning controller, when Optimum HRSG life is selected by the plant operator, will first evaluate what changes (if any) need to be made to the gas turbine f/a ratio to mitigate potential HRSG mechanical concerns and make these necessary changes. Subsequent to this optimization process, the tuning controller will tune the gas turbine, if needed, using the standard parameters of fuel splits, fuel gas temperature, and/or fuel gas composition (Note: gas turbine f/a ratio is not an option),

In a further aspect of the disclosure, the system performs a method for determination of the dominant gas turbine combustion system tuning scenario through the use of Boolean hierarchical logic and multiple levels of control settings,

In another aspect of the disclosure, the method performed relates to automated control of the gas turbine inlet fuel temperature through automated modification of the fuel gas temperature control set point within a Distributed Control System (DCS).

In a still further aspect of the disclosure, a method for automated control of a gas turbine inlet fuel temperature is defined by automated modification of the fuel gas temperature control set point within the fuel gas temperature controller,

In another aspect of the disclosure a method for communicating turbine control signals to a gas turbine controller is accomplished through the use of an existing gas turbine communication link with an external control device, such as, for example a MODBUS Serial or Ethernet communication protocol port existing on the turbine controller for communication with the Distributed Control System (DCS).

In a still further aspect of the disclosure a method for modification of a gas turbine combustion system is defined by a series of auto tuning settings via a user interface display, which utilizes Boolean-logic toggle switches to select user-desired optimization criteria. The method is preferably defined by optimization criteria based on Optimum Combustion Dynamics, Optimum NOx Emissions, Optimum Power, Optimum Heat Rate, Optimum CO Emissions, Optimum Heat Recovery Steam Generator (HRSG) Life, Optimum Gas Turbine Fuel Blend Ratio or Optimal Gas Turbine Turndown Capability whereby toggling of this switch changes the magnitude of the combustor dynamics control setting(s).

### Brief Description of Drawings

For the purpose of illustrating the invention disclosed herein, the drawings show forms that are presently preferred. It should be understood that the invention is not limited to the precise arrangements and instrumentalities shown in the drawings of the present disclosure,
Fig. 1 shows an exemplary embodiment of a schematic representation of an operational plant communication system encompassing the gas turbine engine system, incorporating a gas turbine tuning controller as well as communication with various elements of the HRSG via plant DCS.
Fig. 2 shows an exemplary embodiment of a functional flow chart for the operation of a tuning controller according to the present disclosure.
Fig. 3 shows an exemplary embodiment of a user interface display for selecting the optimization mode within the present disclosure,
Fig. 4 shows an exemplary schematic of the inter-relationship of various optimization mode settings,
Fig. 5 shows an exemplary overview schematic of the process steps utilized to determine the alarm signals triggered according to the present disclosure,
Fig, 6 shows an exemplary process overview of the steps to determine allowable turbine tuning parameters,
Fig, 7 shows a further detailed exemplary process according to the steps shown in Fig. 6.
Fig. 8 provides a further detailed exemplary schematic of the steps the present disclosure utilizes to determine the dominant tuning concern,
Fig. 9 shows a first example schematic of the determination of the system's dominant tuning concern, given various alarm inputs into the present disclosure,
Fig. 10 shows a second example schematic of the determination of the system's dominant tuning concern, given various alarm inputs into the present disclosure.
Fig. 11 shows a third example schematic of the determination of the system's dominant tuning concern, given various alarm inputs into the present disclosure,
Fig. 12 shows a fourth example schematic of the determination of the system's dominant tuning concern, given various alarm inputs into the present disclosure,
Fig, 13 shows a first operational example of operational tuning of a gas turbine engine system as contemplated by the present disclosure,
Fig, 14 shows a second operational example of operational tuning of a gas turbine engine system as contemplated by the present disclosure,
Fig, 15 shows a third operational example of operational tuning of a gas turbine engine system as contemplated by the present disclosure,
Fig, 16 shows a fourth operational example of operational tuning of a gas turbine engine system as contemplated by the present disclosure.

### Detailed Description

The present disclosure generally relates to systems and methods for tuning the operation of combustion turbines, In the depicted embodiments, the systems and methods relate to automatic tuning of combustion turbines, such as those used for power generation, Persons of ordinary skill in the art will appreciate that the teachings herein can be readily adapted to other types of combustion turbines, Accordingly, the terms used herein are not intended to be limiting of the embodiments of the present disclosure, Instead, it will be understood that the embodiments of the present disclosure relate generally to the field of combustion turbines, and in particular for systems, methods and computer readable media for tuning of combustion turbines,

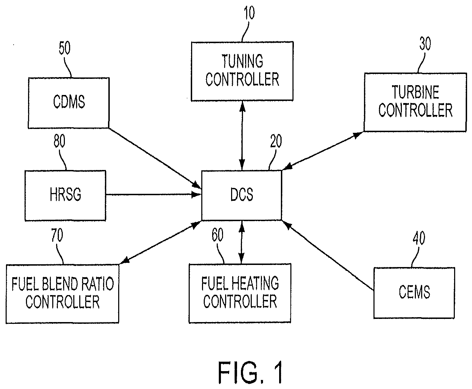

Fig. 1 is a communication diagram for a gas turbine engine (not shown), within which a tuning controller 10 of the present disclosure operates, A distributed control system (DCS) 20 serves as the main communication hub, As an alternative, a plant using the gas turbine controller as a DCS, may also have the tuning controller 10 communicate directly to the gas turbine controller 30, As a further alternative, the tuning controller 10 can communicate directly with the gas turbine controller 30, irrespective if the gas turbine controller 30 is functioning as a DCS. Most of the turbine control is performed through the DCS 20, A turbine controller 30 communicates directly with the gas turbine and with the DCS 20, In the present disclosure, information relevant to turbine operation, e.g., turbine dynamics, turbine exhaust emissions, etc. are directed through the DCS 20 to the tuning controller 10. The tuning controller 10 is contemplated to be a stand-alone PC used to run as a programmable logical controller (PLC), The tuning controller 10 is preferably a separate computer from the turbine controller 30 and does not normally communicate directly with the turbine controller 30, except through the DCS 20, However; as mentioned above, the tuning controller 10 can be configured to directly communicate with the gas turbine controller 30,

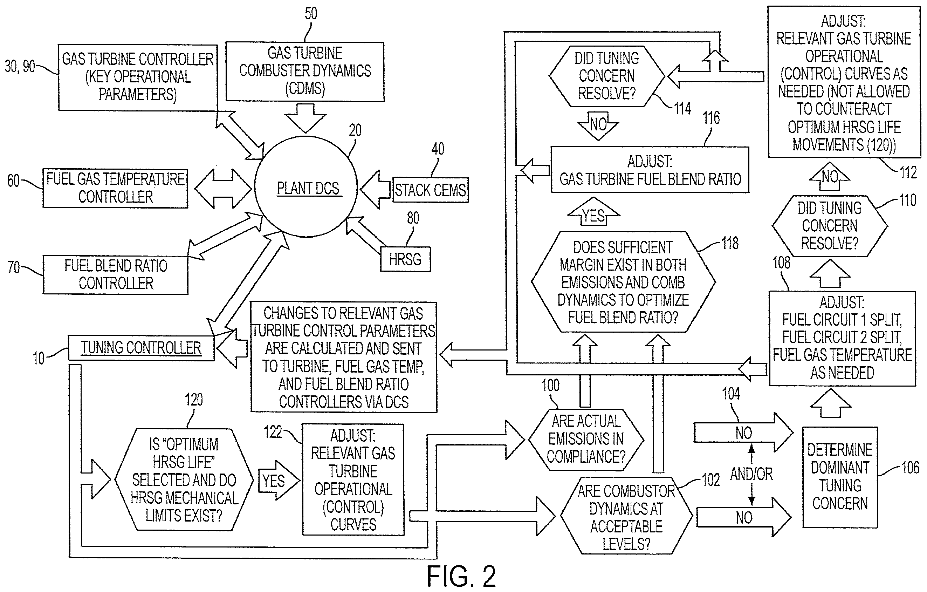

Referring now to Figs. 1 and 2, the tuning controller 10 is contemplated to be a stand-alone PC used to run as a programmable logical controller (PLC). The tuning controller 10 is preferably a separate computer from the turbine controller 30 that is in constant communication from with the turbine controller 30, The signals from the tuning controller 10 may also be transferred to the turbine controller 30 or other controls within the system by the use of an external control device, such as a MODBUS Serial or Ethernet communication protocol port existing on or added to the system,

The relevant operational data is received from sensor means associated with the turbine, For example, the turbine exhaust emission reading is taken from stack emissions by a continuous emissions monitoring system (CEMS) 40, which is connected to the DCS, Combustion dynamics is sensed using a dynamic pressure sensing probe located within the combustion region of the turbine combustor, As shown, a continuous dynamics monitoring system (CDMS) 50 is provided and communicates with the DCS. The CDMS 50 preferably uses either direct mounted or wave guide connected pressure or light sensing probes to measure the combustion dynamics. Another relevant operational parameter is the fuel gas temperature, Again, this temperature information is directed to the tuning controller 10 through the DCS 20 from the fuel heating controller 60. Since part of the tuning operation may include adjustment of the fuel temperature, there may be a two-way communication between the tuning controller 10 and the fuel heating unit 60. The DCS 20 communicates with a fuel blend ratio controller 70 to adjust the ratio of pipeline quality gas to non-pipeline quality gas (for subsequent consumption within the gas turbine). There exists in direct communication between the fuel blend ratio controller 70 and the tuning controller 10 via the DCS 20. Last, as part of this disclosure, certain key operating parameters of the HRSG 80 are sent to the tuning controller 30 via the DCS 20, If the tuning controller 10 determines that various parameters of the HRSG 80 are outside of allowable ranges, changes to the gas turbine f/a ratio are sent from the tuning controller 10 through the DCS 20 to the gas turbine controller 30.

Relevant operational data from the turbine and HRSG is collected several times per minute. This data collection allows for near real-time system tuning. Most relevant turbine and HRSG operational data is collected by the tuning controller 10 in near real-time. However, the turbine exhaust emissions sensor means is typically received by the tuning controller 10 with a 2 to 8 minute time lag from current operating conditions, This time lag necessitates the need for the tuning controller 10 to receive and buffer relevant information, for a similar time lag, before making operational tuning adjustments, This tuning controller 10 tuning adjustment time lag assures that all of the operational (including exhaust emissions) data is representative of a stable turbine operation before and after any adjustments have been made. Once the data is deemed stable, the tuning controller 10 determines whether there is a need for adjustment of tuning parameters. If no adjustment is necessary, the tuning controller 10 maintains the current tuning and waits to receive the next data set. If changes are desired, tuning commences. First, HRSG operational data are compared against HRSG component mechanical limits, If any HRSG mechanical limits (or margin against such limits) are violated, the tuning controller 10 will alter the gas turbine f/a ratio through the DCS 20 to the turbine controller 30, Subsequently, if there is sufficient margin in the key operational characteristics of the gas turbine (namely exhaust emissions and combustor dynamics), the tuning controller 10 can send a command (if applicable) to the fuel gas ratio controller 70 (through the DCS 20) to increase the ratio of non-pipeline quality gas to pipeline quality gas,

All determinations of the need for turbine tuning are performed within the tuning controller 10, The tuning operation is started based on an "alarm" created by receipt of operational data outside of preset operational criteria. In order for the tuning operation to be initiated, the alarm - and thus the data anomaly - must continue for a predetermined period of time.

One example of a tuning adjustment is the variation of the fuel nozzle pressure ratio to adjust combustion dynamics, With the requirement of higher firing temperatures to achieve greater flame temperatures and efficiency, turbine combustors must release more energy in a given combustor volume, Better exhaust emissions are often achieved by increasing the mixing rate of fuel and air upstream of the combustion reaction zone, The increased mixing rate is often achieved by increasing the pressure drop at the fuel nozzle discharge, As the mixing rate increases in combustors, the turbulence generated by combustion often leads to noise within the combustor and may lead to the generation of acoustic waves. Typically, acoustic waves are caused when the sound waves of the combustion flames are coupled with the acoustic characteristics of the combustor volume or the fuel system itself,

Acoustic waves may affect the internal pressure in the chamber, Where pressure near a fuel nozzle rises, the rate of fuel flowing through the nozzle and the accompanying pressure drop decreases, Alternatively, a decrease in pressure near the nozzle will cause an increase in fuel flow, In cases where a low fuel nozzle pressure drop allows fuel flow oscillation, a combustor may experience amplified pressure oscillations, To combat the pressure oscillations within the combustor, combustion dynamics are monitored and the fuel air ratio and fuel nozzle pressure ratio may be modified to reduce or eliminate unwanted variations in combustor pressure, thereby curing an alarm situation or bringing the combustion system back to an acceptable level of combustion dynamics,

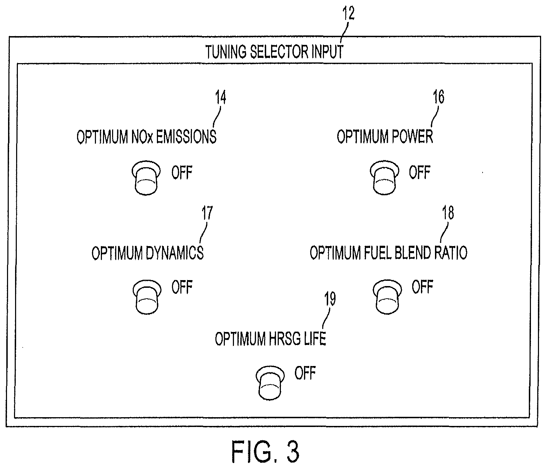

As shown in Fig. 2, the data received from the sensing means for the HRSG operational parameters (80), combustor dynamics (50), turbine exhaust emissions (40), and other relevant turbine operating parameters (30) are directed through the DCS (20) to the tuning controller (10). These input values are then compared to standard or target operational data for the turbine, The stored operational standards are based, at least in part, on the operational priority settings for the turbine, These priority settings are defined on the main user interface 12 of the tuning controller 10 and are shown graphically in Fig. 3, Based on the priority settings, a series of adjustments are made to the operation of the turbine by the turbine controller 10 connected through the DCS 20. The adjustments are directed to the control means, including the fuel heating unit 60 (Fig. 1), fuel blend ratio controller 70, and various other operational elements 90 of the turbine (Fig, 2).

The interface display 12 shown in Fig. 3 is comprised of switches (each having an On/Off indication), These switches allow the user to specify the desired tuning priorities for the operation of the turbine, The switched operational priorities include optimum NOx emissions 14, optimum power 16, optimum combustor dynamics 17, optimum fuel blend ratio 18, and optimum HRSG life 19, Each of these switches is set by the user to adjust the preferred operation of the turbine, Within the tuning controller are functions that operate within the priorities set by the switches, Preferably, if both the optimum NOx emissions switch 12 and the optimum power switch 14 are set to "On", the controller 10 will run in the optimum NOx mode, not optimum power. Thus, to run in optimum power mode, the optimum NOx emissions switch 12 must be "Off". Optimum dynamics 17 can be selected at any time. It is explicitly noted that other User-Interface Toggle Switches (not shown) may be used, including parameters such as Optimum Heat Rate, Optimum CO emissions, Optimum Heat Recovery Steam Generator (HRSG) Life, Optimum Gas Turbine Fuel Blend Ratio, Optimal Gas Turbine Turndown Capability, etc.

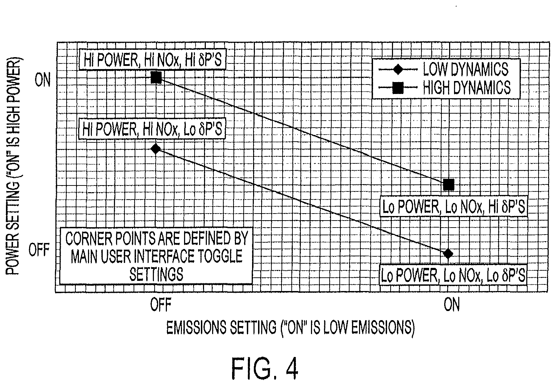

Fig. 4 shows a graphical representation of the interrelationship of the interface display switches. As shown, switching one parameter "On" will alter the alarm limits to a different level than their "Off" level. In the example shown in Fig, 4, the alarm limits are shown with both Optimum NOx and optimum power in the "On" position and in the "Off" position, These points on the graph are then modified by the selection of optimum dynamics (represented throughout by the symbol δ) in either the "On" or "Off' position, The points shown on the graph of Fig, 4 represent an exemplary set of limits for dynamics, based on the user's selected operational priorities,

Returning to Fig. 2, there is shown a representation of the logical flow of the determinations and calculations made within the tuning controller 10. The tuning controller 10 receives the actual operating parameters of the turbine through the turbine controller 30, combustor dynamics through the CDMS 50, turbine exhaust emissions through the CEMS 40, and relevant HRSG operating parameters 80, This sensor data is directed to the tuning controller 10 through the DCS 20, The received sensor data is compared to stored operational standards to determine if the turbine operation is conforming to the desired settings, The operational standards are based on the preset operational priorities of the turbine, defined by the switches 14, 16, 17, 18, and 19 on the main user interface display 12 of the tuning controller 10 (Fig. 3).

Based on the preset operational priorities, a hard-coded hierarchical Boolean-logic approach determines the dominant tuning criteria based on operational priorities, From this logical selection, the tuning controller 10 implements a fixed incremental adjustment value for changing an operational parameter of the turbine within a maximum range of adjustment (e.g., high and low values). The tuning changes are made in a consistent, pre-determined direction over a pre-determined increment of time and are dependent on the dominant tuning criteria at present, It is contemplated that no formulaic or functional calculations are made to determine the magnitude of tuning adjustments; rather, the incremental adjustments, the direction of the adjustments, the time span between adjustments, and the maximum range for the adjustments for each parameter and for each tuning criteria are stored in the tuning controller 10.

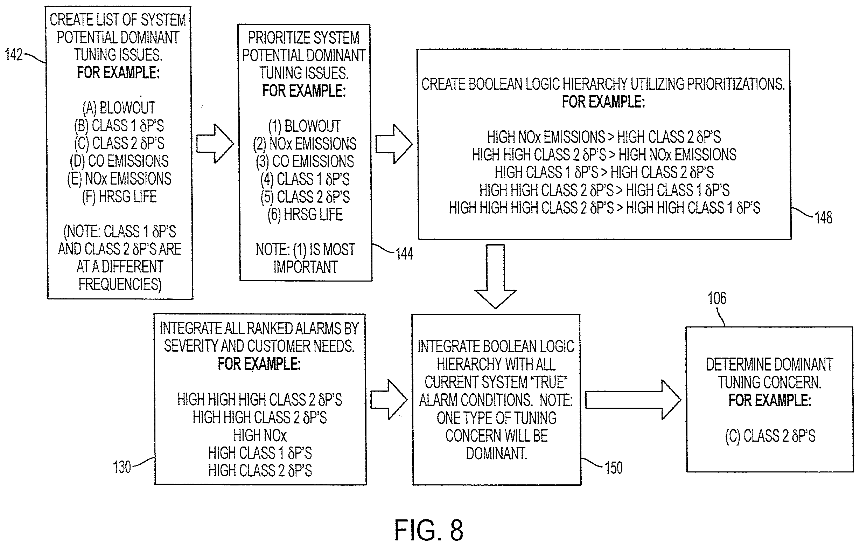

As shown in Fig. 2, when Optimum HRSG Life 19 is not selected by the operator, the tuning controller 10 determines whether the emissions are in compliance 100 and whether the combustor dynamics are at acceptable levels 102. If both are in compliance with the set operational standards, the tuning controller 10 waits for the next data set from the CEMS 40 or the CDMS 50, and for other turbine operational data 90, If both are in compliance with the set operational standards and possess sufficient operational margin, and Optimum Fuel Blend Ratio 18 is selected, the tuning controller 10 will send a command to the fuel blend ratio controller 70 to increase the ratio of non-pipeline quality gas to pipeline quality gas. If the received data is non-conforming with the operational standards, i.e. above or below alarm levels, as is the case with step 104 of Fig, 2, the tuning operation moves to the next tuning step of first determining the dominant tuning concern 106, The logical adjustment of turbine operation is defined by the dominant tuning criteria 106, which is based, at least in part, on the preset operational priorities set within the user interface 12, as will be discussed below with respect to Fig. 8.

If Optimum HRSG Life 19 is selected by the operator, the first decision the tuning controller makes is an assessment of the margin of pertinent HRSG parameters (including but not limited to high pressure superheat outlet steam temperature, hot reheat outlet steam temperature, high pressure superheat steam desuperheater margin against saturation (degrees Fahrenheit of temperature immediately downstream of attemperator compared to saturation temperature), hot reheat steam desuperheater margin against saturation) against design limits, These temperature margins are compared against allowable margins as defined by the user. If the actual temperature margins are less than the allowable margins, the tuning controller 10 will automatically adjust the turbine controller's f/a ratio 122. In this particular case, the tuning controller 10 has first adjusted the gas turbine's f/a ratio for an external reason (HRSG component life), This change can adversely affect the gas turbine's current state-of-tune, Therefore, the normal gas turbine tuning scheme is performed by the tuning controller 10; however, changes to the turbine's f/a ratio are not allowed, The remaining gas turbine tuning scheme is defined below,

In a preferred operation, the tuning controller 10 will first attempt to change the turbine combustor fuel splits 108. The fuel split determines the distribution of the fuel flow to the fuel nozzles in each combustor, It should be noted that while the current embodiment indicates the presence of two adjustable fuel circuits, this approach can be utilized for one, two or more fuel circuits. If these adjustments do not resolve the tuning issue and do not place the operational data back into conformance with the operational standards, a further adjustment is performed. In certain situations or if the efficacy of fuel split changes on resolving high combustor dynamics is low, the next incremental adjustment is a change of the fuel gas temperature set point. In this adjustment step, the tuning controller 10 sends a modified fuel gas inlet temperature signal to the DCS 20, which is directed to the fuel heating unit 60.

Referring again to Fig. 2, if modification of the combustor fuel splits and/or fuel gas inlet temperature does not resolve the tuning issue 110, the tuning controller 10 will then alter the overall fuel/air ratio 112. This approach makes changes to the turbine thermal cycle utilizing fixed incremental changes over pre-determined amounts of time. The step is intended to adjust the exhaust temperature (up or down) by adjusting the air to fuel ratio in accordance with predetermined, standard control curves for the turbine operation, which are maintained within the memory of the tuning controller 10, If changes made to the gas turbine's overall fuel/air ratio do not resolve the tuning issue 114 or if Optimum HRSG Life 19 is enabled and HRSG mechanical concerns exist, the tuning controller 10 will adjust the fuel blend ratio 116.

In the present disclosure, it is contemplated that all control changes directed by the tuning controller 10 are fed back to the turbine system (30, 90), fuel gas temperature controller 60, and fuel blend ratio controller 70 through the DCS 20, However, the tuning controller 10 can be configured to communicate directly with the turbine controller 30, These changes are implemented directly within the various controller means within the system or through the turbine controller 30, When the operational data is returned to the desired operational standards, the tuning settings are held in place by the tuning controller pending an alarm resulting from non-conforming data received from the sensor means through the DCS.

The adjustments sent from the tuning controller 10 to the turbine controller 30 or the associated controller (60, 70) means are preferably fixed in magnitude, Thus, the adjustments are not recalculated with new data or optimized to a target, The adjustments are part of an "open loop", Once started, the adjustments move incrementally to the preset maximum or maximum within a specified range, unless an interim adjustment places the operation data into conformance with the operational standards, Under most circumstances, when the full incremental range for one operational parameter is completed, the tuning controller moves on to the next operational parameter, which is defined by the preset operational priorities, The specific order of operational control elements is not fixed, and can be determined by operational priorities, The logic of the tuning controller drives the operational control element adjustment based on a "look-up" table stored within the memory of the tuning controller and preset operational priorities.

The tuning controller preferably addresses one operational parameter at a time. For example, the dominant tuning criteria dictates the first adjustment to be made. In the preferred example discussed above, the fuel distribution/split parameter is first adjusted. As indicated in Fig, 2, the fuel split of fuel circuit 1 is first addressed, followed by the split for fuel circuit 2, Again, this method can be applied to any combustion system with one or more adjustable fuel circuits, The fuel gas inlet temperature adjustment generally follows the fuel split adjustments when needed, Within each step, there is an incremental adjustment, followed by a time lag to permit the adjusted turbine operation to stabilize. After the time lag, if the current operational data analyzed by the tuning controller indicates that turbine operation still remains outside of the operational standards, the next incremental adjustment within the step is made. This pattern repeats for each step, Under most circumstances, only when one adjustment step is completed does the tuning controller move onto the next operational parameter, It should be noted that there exists an over-riding loop whereby the tuning controller 10 will directly increase the non-pipeline quality gas blend ratio (through the fuel blend ratio controller 70) if key turbine operational characteristics possess ample operational margin (against alarm conditions) 118. The control methodology of this over-riding control loop is identical to that mentioned above for fuel splits and turbine f/a ratio - a change is made in a pre-defined direction, a pre-defined amount, in a pre-defined amount of time.

The tuning controller preferably controls combustion operation to maintain proper tuning in variable conditions of ambient temperature, humidity and pressure, all of which vary over time and have a significant effect on turbine operation, The tuning controller may also maintain the tuning of the turbine during variation in fuel composition. Variation in fuel composition may cause a change in the heat release, which can lead to unacceptable emissions, unstable combustion, or even blow out, The tuning controller will adjust the fuel composition entering the turbine indirectly through changes in the fuel blend ratio 116.

Another aspect regarding fuel splits within the combustor deals directly with combustion systems having a series of outer nozzles (of the same type, controlled by an outer fuel split affecting circumferential distribution of fuel within the outer fuel nozzles) in combination with a center nozzle (of same or different type compared to outer nozzles, controlled by an inner / center fuel split). Within this framework, the center nozzle can either operate with a "rich" or "lean" fuel-to-air ratio, as compared to the f/a of the outer fuel nozzles. Most combustion tuning keeps the combustion system either on a "lean center nozzle" or a "rich center nozzle" mode of operation, In some circumstances, better flame stability can be achieved with a "rich center nozzle" fuel split profile when compared to a "lean center nozzle"; however, this normally results in higher NOx emissions, Therefore, a hybrid fuel schedule is of particular interest, whereby the combustion system utilizes a "lean center nozzle" fuel split schedule at higher load conditions (where flame stability is less of a concern but NOx emissions are more of a concern) transitioning to a "rich center nozzle" fuel split schedule at lower load and turndown conditions (where flame stability is more of a concern and NOx is less of a concern), The system of the present disclosure determines which fuel split schedule is employed (rich or lean center nozzle) at each operating point (allowing for the use of a hybrid fuel split schedule), and adjusts the fuel split schedule (Fuel Circuit 1 Split and Fuel Circuit 2 Split) in the proper direction, Again, changes made are of fixed magnitude in fixed time intervals.

Another point regarding fuel splits deals directly with combustion systems having a series of outer nozzles (of same or different type, controlled by an outer fuel split affecting circumferential distribution of fuel within the outer fuel nozzles) with no center nozzle, Within this framework, a subset of these outer nozzles (referred to generally as minor circuit 1) can either operate with a "rich" or "lean" fuel-to-air ratio, as compared to the f/a of the remaining outer fuel nozzles (referred to as major circuit 1). Most combustion tuning keeps the combustion system either on a "lean minor circuit 1" or a "rich minor circuit 1" circumferential fuel split mode of operation, In some circumstances, better flame stability can be achieved with a "lean minor circuit 1" fuel split profile when compared to a "rich minor circuit 1" fuel split profile; however, this can result in higher NOx emissions, Therefore, a hybrid fuel schedule is of particular interest, whereby the combustion system may utilize a "rich minor circuit 1" fuel split schedule at higher load conditions (where flame stability is less of a concern but NOx emissions are more of a concern) transitioning to a "lean minor circuit 1" fuel split schedule at lower load and turndown conditions (where flame stability / CO is more of a concern and NOx is less of a concern), The system of the present disclosure determines which fuel split schedule is employed (rich or lean minor circuit 1) at each operating point (allowing for the use of a hybrid fuel split schedule), and adjusts the fuel split schedule (Fuel Circuit 1 Split and Fuel Circuit 2 Split, if applicable) in the proper direction, Again, changes made are of fixed magnitude in fixed time intervals.

One further aspect regarding fuel splits deals directly with combustion systems having one or more annular rings of fuel nozzles (of same or different type, controlled by an circumferential fuel split affecting circumferential distribution of fuel within each ring of fuel nozzles), whereby a second family of fuel splits may be available (if more than one annular ring of fuel nozzles exists)which adjusts the relative (radial) amount of fuel to each of the radially concentric fuel rings (ring 1, ring 2, etc,), Within this framework, a subset of each ring's fuel nozzles (referred to as minor circuit ring 1, minor circuit ring 2, etc.) can either operate with a "rich" or "lean" fuel-to-air ratio, as compared to the f/a of the remaining ring's fuel nozzles (referred to as major circuit ring 1, major circuit ring 2, etc.). Most combustion tuning keeps the combustion system either on a "lean minor circuit ring 1" or a "rich minor circuit ring 1" (and similar approaches for rings 2, 3, etc,) circumferential fuel split mode of operation, In some circumstances, better flame stability can be achieved with, using ring 1 as an example, a "lean minor circuit ring 1" fuel split profile when compared to a "rich minor circuit ring 1" fuel split profile; however, this can result in higher NOx emissions. Therefore, a hybrid fuel schedule is of particular interest, whereby the combustion system may utilize a "rich minor circuit ring 1" fuel split schedule at higher load conditions (where flame stability is less of a concern but NOx emissions are more of a concern) transitioning to a "lean minor circuit ring 1" fuel split schedule at lower load and turndown conditions (where flame stability / CO is more of a concern and NOx is less of a concern), The system of the present disclosure determines which fuel split schedule is employed for each ring, if applicable (rich or lean minor circuit ring 1, rich or lean minor circuit ring 2, etc.) at each operating point (allowing for the use of a hybrid fuel split schedule), and adjusts the fuel split schedule (Fuel Circuit 1 Split and Fuel Circuit 2 Split, if applicable) in the proper direction. Again, changes made are of fixed magnitude in fixed time intervals.

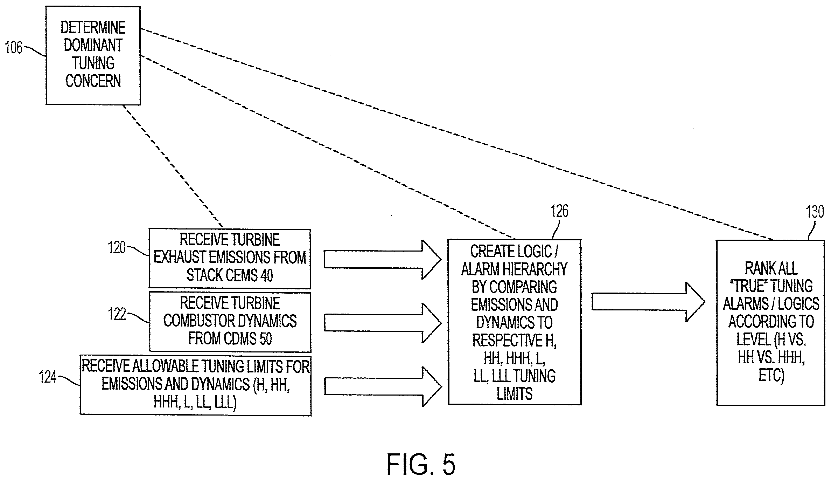

Fig. 5 provides a schematic that details the framework for determining the dominant tuning concern 106, as included in Fig. 2, Future steps will be described below with respect to Fig. 8. First, relevant emissions parameters 120 and combustor dynamics 122 are received by the tuning controller 10 from the CEMS 40 and CDMS 50, as detailed above. The relevant emissions parameters 120 and combustor dynamics 122 are then compared to allowable tuning limits 124 that are also provided to the tuning controller 10, The allowable tuning limits are in the form of preset ranges that may be adjusted using the tuning interface 12 of Fig. 3 and determined according to the logic set forth below with respect to Figs, 6 and 7. The output of this comparison is a series of "True" alarms 126 of various tuning concerns, where an alarm condition is indicated if the sensed operational data 120, 122 is above or below a given alarm range set forth in the tuning limits 124.

Alarm conditions may have more than one level or tier. For example, there may be varying degrees of severity of an alarm, such as: high "H"; high-high "HH"; high-high-high "HHH" and low "L"; low-low "L"; low-low-low "LLL". The "True" logical alarms 126 are subsequently ranked according to their level of importance (e.g. high - high "HH" alarms are more important than high "H" alarms, etc,) in step 130. If more than one tuning concern shares the same level, the tuning concerns will then be ranked according to the user preferences as set forth below with respect to Fig. 8. If only one "True" alarm emerges, this will be selected and used as the dominant tuning concern 106 to initiate the tuning process as set forth in Fig, 2. However, the results of the process of Fig. 5, namely the ranked "True" alarms 130, will be processed through user determined criteria, as shown in Fig, 8, before a dominant tuning concern 106 is confirmed,

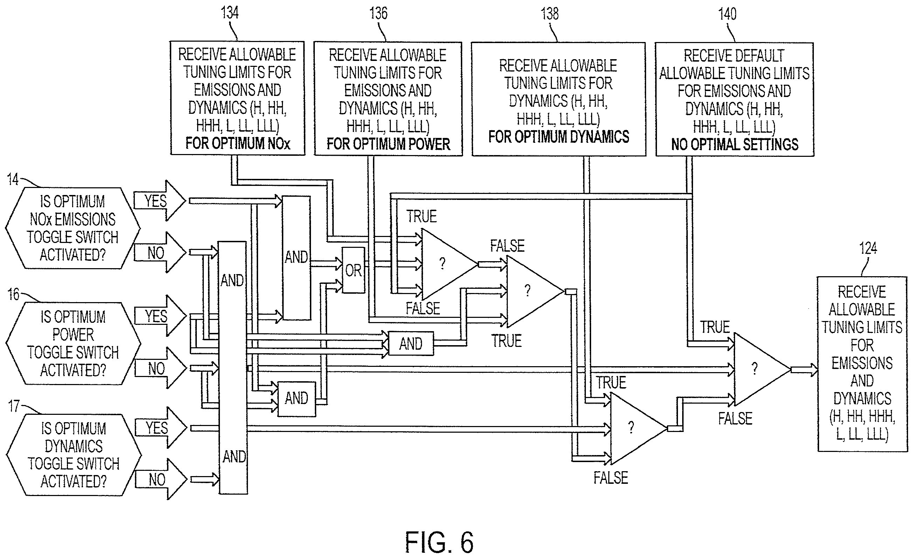

In Fig. 6, a flow chart is provided to explain how the allowable tuning limits 124 are determined, Once determined, the tuning limits 124 are compared to the operational data 120, 122 as set forth above and shown in Fig. 5, First, the User Interface Toggle Switches 14, 16, 17 corresponding to those in the interface display 12 of Fig. 3, are compared against each other, utilizing an internal hierarchy to allow passage of the alarm constraints relative to the most significant toggle switch, Thus, depending on which switches are in the "On" position, different tuning limits will be included in the allowable tuning limits 124, Each of Optimum NOx, Optimum Power and Optimum Dynamics has a collection of preset limits (denoted by the numerals 134, 136 and 138 in Fig, 6), depending on whether the corresponding toggle switch 14, 16, 17 is in the "On" of "Off" position, There is also an internal set of default limits 140 to be used when none of the toggle switches are in the "On" position,

The internal hierarchy will determine which tuning limits shall take precedence in the event that competing toggle switches 14, 16 or 17 are in the "On" position. In the present example, the hierarchy ranks Optimum NOx 14 above Optimum Power 16, Optimum Dynamics 17 may be selected at any time and will simply alter the tuning limits of the other selections given, such as is shown in Fig, 4, If Optimum NOx 14 and Optimum Power 16 are both in the "On" position, the tuning limits for Optimum NOx 134 will be used, Additionally, the tuning limits for Optimum Dynamics 138 are utilized if this toggle switch 17 is activated, If no User Interface Toggle Switches 14, 16, 17 are active, default tuning limits 140 are provided as the allowable tuning limits 124, All of the tuning limits 134, 136, 138 and 140 that may be used to construct the allowable tuning limits for the tuning controller 10 may be developed by the end user and programmers and are then preferably hard coded into the tuning controller 10 for a given application, The methodology outlined in Fig, 6 is meant to provide an exemplary framework for incorporation of a number of different User Interface Toggle Switches, such as those options set forth above with respect to Fig. 3 including Optimum HRSG Life 19, whereby only a subset are specifically outlined in this disclosure,

Fig, 7 shows a specific example of the flow chart of Fig. 6 given for the determination of a subset of the system's allowable tuning limits. In this example, the tuning limits for High NOx, High HighNOx, High Class 1 δP's, High Class 2 δP's will be determined based on preset tuning limits and the user's preferences, The various exemplary tuning limits are provided for Optimum NOx 134, Optimum Power 136, Optimum Dynamics 138, and No Optimal Settings 140 are given corresponding numerical values (shown respectively in blocks 152, 154, 156 and 158). The corresponding numerical values given for each criterion vary, such that the allowable limits 124 will be different depending on which toggle switches 14, 16 or 17 are selected. By way of example, the Optimum NOx 134, 152 and Optimum Power 136, 154 give limits for NOx, but also provide limits for Dynamics that are to be used in the event that Optimum Dynamics 138, 156 is not selected. However, in the event that the Optimum Dynamics toggle 17 is selected, the Class 1 δP's and Class 2 δP's values provided therefore 156 shall be used instead of the values listed with respect to Optimum NOx 134, 152 and Optimum Power 136, 154.

In this particular example, the toggle switches for Optimum NOx 14 and Optimum Dynamics 17 are selected, with the switch for Optimum Power 16 left in the "Off' position. Thus, the values from Optimum NOx for High NOx and High HighNOx 152 are provided, Also, because Optimum Dynamics 17 is also selected, the Dynamics values for High Class 1 δP's and High Class 2 δP's 138, 156 replace those δP's values provided with respect to Optimum NOx 134, 152. As a result, the allowable tuning limits 124 are provided as shown in block 160. These allowable tuning limits 124 correspond to those used in Fig, 5, as described above, to determine whether information from the CEMS 40 and CDMS 50 is in an alarm state or operating normally,

Fig. 8, shows a further schematic for the process of incorporating a user's priorities and the "True" alarm conditions received for determining the dominant tuning concern 106. It is this tuning concern 106 which dictates the turbine operational changes the turbine controller 10 performs, as shown in Fig. 2.

First, a determination is made of all potential dominant tuning issues 142. These include, but are not limited to: combustor blowout, CO emissions, NOx emissions, Class 1 combustor dynamics (Class 1 δP's), Class 2 combustor dynamics (Class 2 δP's), and HRSG mechanical life, The list of potential dominant tuning issues 142 is determined by the user and programmer and may be based on a number of factors or operational criteria. By way of example, Class 1 and Class 2 combustor dynamics δP's refer to combustion dynamics occurring over specific ranges of acoustic frequencies, whereby the range of frequencies is different between Classes 1 and 2, Indeed, many combustion systems can possess different acoustic resonant frequencies corresponding to Class 1 and Class 2, and variations in these 2 dynamics classes may be mitigated utilizing different turbine operational parameter changes for each different turbine and / or combustor arrangement. It should also be noted that certain combustion systems may have none, 1, 2, or greater than 2 different "classes" (frequency ranges) of combustor dynamics which can be tuned, This disclosure utilizes a system whereby 2 different combustor dynamics classes are mentioned, However, it is fully intended that this disclosure can be broadly applied to any number of distinct dynamics frequency classes (from 0 to greater than 2).

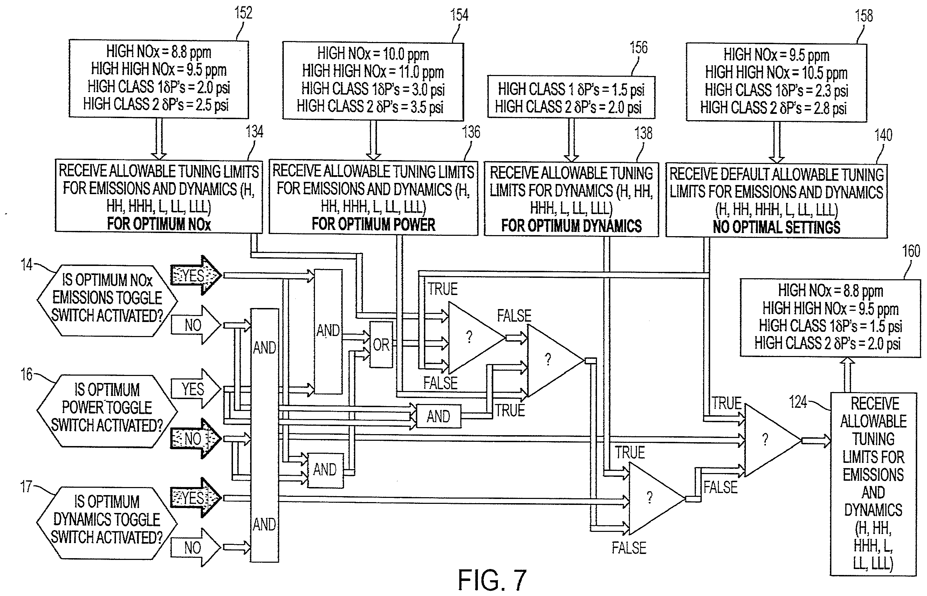

After determination of the potential dominant tuning issues 142, these issues arc ranked in order of significance 144 according to the end user's needs as well as the detrimental effects that each tuning concern can have on the environment and / or turbine performance, The relative importance of each potential dominant tuning concern can be different with each end user, and for each combustor arrangement, For example, some combustion systems will demonstrate an extreme sensitivity to combustor dynamics, such that normal daily operational parameter variations can cause a normally benign dynamics tuning concern to become catastrophic in a very short amount of time, In this case, one or both of the dominant dynamics tuning concerns (Class 1 and Class 2) may be elevated to Priority 1 (Most Important). By way of example in Fig. 7, combustor blowout is listed as the most important Dominant Tuning Concern 144. This ranking is used to determine the dominant tuning concern in the event that there are multiple alarms with equal levels of severity, This ranking of Dominant Tuning Concerns 144, from most to least important, provides the overall framework where the specific Boolean Logic Hierarchy 148 is created, For example, assuming Class 1 and Class 2 δP's obey generally monotonic behavior relative to perturbations in system operational parameters, a High-High "HH" Class 2 δP's alarm may be more significant than High "H" Class 1 δP's alarm. Additionally, in the example given in Fig, 8 for the Boolean Logic Hierarchy 148, High "H" NOx emissions is more significant than High "H" Class 2 dynamics, This means that if both High "H" NOx and High "H" Class 2 dynamics are both "in alarm" (Logic = True), in the absence of other alarms being "True", the autotuning system will tune for High "H" NOx because it is the dominant tuning concern, Finally, it can be seen that Blowout is ranked above NOx Emissions and both are ranked above Class 1 δP's. Thus, if there were high "H" alarms returned for all three categories, Blowout would be the dominant tuning concern, followed by NOx Emissions and then Class 1 δP's. This Boolean Logic Hierarchy 148 will be what is compared to the "True" alarms 130 returned by comparing the allowable tuning limits 124 to the operational data 120, 122 as set forth above with respect to Fig. 5.

All "True" tuning alarms 130 are provided as ranked by severity (e.g. HHH above HH, etc,), The "True" tuning alarms 130 are then compared with the hard-coded Boolean Logic Hierarchy 148, in step 150 to determine which tuning will become the "True" Dominant Tuning Concern 106. This one "True" Dominant Tuning Concern 106 is now passed into the remainder of the autotuning algorithm, as detailed in Fig, 2, as the Dominant Tuning Concern 106 to be mitigated by operational changes,

Thus the tuning controller 10 may be configured to optimize the mechanical life of a Heat Recovery Steam Generator (HRSG) through the manipulation of the gas turbine exhaust temperature (turbine fuel air (f/a) ratio) when key HRSG operational characteristics indicate insufficient design margin against over-temperature (at steam outlet conditions) and / or over-attemperation (at intra-stage desuperheater), The HRSG will have sensors for measuring operational parameters of the boiler, and the turbine having sensor means for measuring operational parameters of the turbine, as discussed above, The HRSG operational parameters include high pressure and/or hot reheat steam outlet temperatures and/or high pressure and/or hot reheat intra-stage desuperheater outlet temperatures and pressures, The turbine operational parameters include combustor dynamics and turbine exhaust emissions. Using the logic applied above with respect to alarm levels, the turbine controller will adjust various operational control elements, such as fuel distribution and / or fuel-to-air (f/a) ratio, as needed,

The control system for optimizing HRSG life is set forth above in Fig. 1 and (optionally) relies on the turbine controller 10 communicating through the DCS20 to the sensor means and the control means listed above to control the operational control elements of the turbine. In order to maximize HRSG life in light of other potential operational priorities, a user will select operational priorities for HRSG and / or other turbine operation, selected from the group comprising optimum NOx emissions, optimum power output, optimum combustor dynamics, optimum HRSG life, and / or optimum fuel blend ratio (ratio of non-pipeline quality gas to pipeline quality gas). The below examples will be provided for instances where the Optimum HRSG Life 19 is selected in the control panel shown in Fig. 3, such that Optimum HRSG Life is an operating priority, potentially in addition to other selected priorities,

During operation, the turbine controller will receive operational data from the gas turbine sensor means and the HRSG sensor means. The operational data will be compared to stored operational standards, based on the selected operational priorities, Using this comparison, the turbine controller will determining if both the HRSG and gas turbine operation conform to the operational standards,

To the extent that either the HRSG or gas turbine operational parameters are not within allowable limits, the tuning controller 10 will determine the dominant tuning criteria for non-conforming operation of the HRSG and / or the gas turbine, based on the preset operational priorities. With the dominant tuning criteria determined, the turbine controller 10 will communicate with the selected operational control elements to perform a selected adjustment in the operational control element of the gas turbine, The operational control element may be combustor fuel distribution split within the nozzles of the combustor, fuel gas inlet temperature, fuel/air ratio within the turbine, and / or gas fuel blend ratio (fuel composition), The adjustment to the operational control element will be based on the dominant tuning criteria and have a fixed incremental value and defined range, each incremental change input over a set period of time sufficient for the turbine to gain operational stability,

The sensing process will be repeated in open loop fashion, such that the turbine controller will subsequently receive further data regarding the operational parameters from the HRSG and gas turbine sensor means upon passage of a set period of time to determine if an additional incremental change is desired. If additional tuning is required, further incremental adjustments will be made to the operational control element within a defined range, To the extent that the range of available adjustments to a particular control element are exhausted, the tuning controller 10 will select a further operational control element adjustment based on the dominant tuning criteria, the further selected adjustment having a fixed incremental value and defined range, with each incremental adjustment made over a set period of time sufficient for the turbine to gain operational stability. The sensing and adjustment (if needed) process will be continued during the operation of the turbine and HRSG,

In one embodiment, the system can be programed with stored operational data, such that the mechanical life of an HRSG is optimized in the tuning process by first adjusting the fuel-to-air ratio of the gas turbine in increments to change the HRSG hot gas inlet conditions to provide sufficient design margin in key HRSG operational parameters (i.e. lowering or raising the temperature of the hot gas inlet), The tuning can then continue as may be required as a result of these changes made to the turbine's f/a ratio. For example, the HRSG may be provided with sensor means for measuring operational parameters of the associated boiler, including high pressure and/or hot reheat outlet steam temperatures as well as high pressure and/or hot reheat intra-stage desuperheater outlet temperatures and pressures, The gas turbine having will also have sensor means for measuring operational parameters of the turbine, including stack emissions and combustion dynamics from the turbine and control means for various operational elements of the turbine, including fuel distribution and / or fuel temperature and / or fuel blend ratio and / or fuel-to-air ratio. Optionally, the tuning controller 10, various sensor means and control means may either be connected directly or via a distributed control system (DCS). The control system may also be provided with means for setting operational priorities for turbine operation, selected from the group comprising optimum NOx emissions, optimum power output, optimum combustor dynamics, optimum fuel blend ratio, and / or optimum HRSG life, such as that shown in Fig. 3 discussed above. Using this tuning system, operational priorities are selected, operational parameters are sensed and tuning occurs using the methods discussed herein with respect to optimizing HRSG life and turbine operation, provided that in this instance, f/a ratio is the predetermined first operational control element to be adjusted to optimize HRSG life, while other operational control elements may be adjusted in order to keep the combustion turbine within the allowable limits for each operational parameter.

A method of optimizing the mechanical life of an HRSG through tuning the operation of a gas turbine, is now disclosed using the systems described herein. The method first includes establishing a communication link between the turbine controller 10 and (optionally) the DCS 20 and receiving data from the HRSG and / or gas turbine sensor means regarding the status of various operational parameters of the HRSG and the turbine, The operational parameter values are then compared to set of standard data to determine if adjustment to operational control elements is required in order to bring the operation of the turbine or HRSG into allowable limits, If tuning is needed, the tuning controller will communicate with the selected operational control elements to perform a defined incremental adjustment of the selected control element. The system then receives, at the tuning controller, via the sensor means and DCS operational parameter data regarding the operation of both the HRSG and the turbine from the sensor means and determines if the adjustment conforms turbine operation to a set standard or if a further incremental adjustment is desired,

The sensed data from the HRSG may include steam outlet temperatures and / or steam superheater intra-stage attemperator over-saturation conditions, The operational control element that is adjusted to modify the values of these sensed parameters may be the fuel-to-air ratio of the turbine. Once the HRSG values are within allowable limits, if further tuning is required to bring the operation of the turbine within its allowable limits, This will be done according to the tuning methods described above, preferably without further modification to the f/a ratio, such that the operational control elements of fuel gas temperature, fuel splits or fuel blend ratio.

The tuning of the system may be adapted for method for tuning a premixed combustion system wherein there exists two distinct modes of operation, The turbine being tuned (not shown) may have an outer ring of identical fuel nozzles utilizing an outer nozzle fuel split to modulate the circumferential fuel distribution within these outer nozzles, an inner fuel nozzle which utilizes an inner nozzle fuel split to adjust the fuel-to-air ratio of the inner to outer nozzles, The outer an inner nozzles discussed herein are known to those skilled in the art and not specifically recounted herein, The two distinct modes of operation comprise a "lean" inner nozzle mode whereby the f/a ratio of the inner nozzle is less than the f/a ratio of the outer fuel nozzles, and a "rich" inner nozzle whereby the f/a ratio of the inner nozzle is greater than the f/a ratio of the outer fuel nozzles. The method for tuning a system having these distinct modes comprises selecting, at the tuning controller 10 of a hybrid fuel split schedule for varying modes based on the turbine load, The "lean" center nozzle fuel split schedule will be at higher load conditions and the "rich" fuel split schedule will be used at lower load and turndown conditions, where the turbine is being operated at the lowest level possible in order to maintain operation of the HRSG.

The method may include the steps disclosed above along with making, at the tuning controller 10, a determination of whether the current mode of operation is utilizing either a "lean" or "rich" inner nozzle mode of operation, and selecting the direction of adjustment for Fuel Circuit Split 1 and / or Fuel Circuit Split 2 when a tuning issue exists, depending on which mode of operation is being utilized at the current operating conditions and preset operational parameters stored within the turbine controller,

All of the methods provided above can be conducted using Boolean-logic toggle switches, such as those shown in Fig, 3, to select user-desired optimization criteria, One of the optimization criteria is Optimum HRSG Life, whereby toggling of this switch to a "1" ("TRUE") allows the tuning controller to improve HRSG mechanical operating margins, such as steam outlet temperature and / or steam superheater intra-stage attemperator saturation temperature margin, through changes in the HRSG inlet conditions via modifications to the gas turbine fuel-to-air ratio, These changes may be made using the methods and systems disclosed above.

A method for tuning a premixed combustion system is also provided whereby there exists an outer ring of fuel nozzles utilizing an outer nozzle fuel split to modulate the circumferential fuel distribution within these outer nozzles, utilizing two modes of operation: a "lean minor circuit 1" subset of the outer nozzles whereby the f/a ratio of this outer fuel nozzle subset is less than the f/a ratio of the remaining outer fuel nozzles, and a "rich minor circuit 1" inner nozzle whereby the f/a ratio of this outer fuel nozzle subset is greater than the f/a ratio of the remaining outer fuel nozzles, The method includes usage of a hybrid fuel split schedule, with a "rich minor circuit 1" fuel split schedule at higher load conditions, and usage to a "lean minor circuit 1" fuel split schedule at lower load and turndown conditions, The method may also include varying other operational control elements, as described herein, in order to bring the operation of the turbine or HRSG into allowable limits,

The method may also include usage of a hybrid fuel split schedule, with a "lean minor circuit 1" fuel split schedule at higher load conditions, and usage to a "rich minor circuit 1" fuel split schedule at lower load and turndown conditions, Further, the method may include making a determination, at the tuning controller 10, if the current mode of operation is utilizing either a "lean minor circuit 1" or "rich minor circuit 1" mode of operation, and adjusting, using operational control elements for fuel splits, the Fuel Circuit Split 1 and / or Fuel Circuit Split 2 in the proper direction, when a tuning issue exists, depending on which mode of operation is being utilized at the current operating conditions,

A method is also provided for tuning a premixed combustion system, using similar systems and steps as described above, whereby there exists one or more annular rings of fuel nozzles (of same or different type, controlled by an circumferential fuel split affecting circumferential distribution of fuel within each fuel nozzle ring), In the current system, it is contemplated that a second family of fuel splits may be available (if more than one annular ring of fuel nozzles exists), which adjusts the relative (radial) amount of fuel to each of the radially concentric fuel nozzle rings (ring 1, ring 2, etc,), utilizing two modes of operation: a "lean minor circuit ring 1" subset of the ring 1 fuel nozzles whereby the f/a ratio of this ring 1 fuel nozzle subset is less than the f/a ratio of the remaining fuel nozzles of ring 1, and a "rich minor circuit ring 1" subset of the ring 1 fuel nozzles whereby the f/a ratio of this outer fuel nozzle subset is greater than the f/a ratio of the remaining fuel nozzles of ring 1, The tuning method comprises , use of a hybrid fuel split schedule, with a "lean minor circuit ring 1" fuel split schedule at higher load conditions, usage of a "rich minor circuit ring 1" fuel split schedule at lower load and turndown conditions, and similar usage of "rich" and "lean" fuel split schedules, one at high loads and the other at lower load / turndown conditions, for each of the remaining fuel nozzle rings of the combustion system. Each of the fuel schedules may be pre-programmed into the tuning controller 10 and selected based on sensed operational parameters of the system,

The method may also be modified, depending on operational priorities and user input to the tuning controller 10, to include usage of a hybrid fuel split schedule, with a "rich minor circuit ring 1" fuel split schedule at higher load conditions, usage to a "lean minor circuit ring 1" fuel split schedule at lower load and turndown conditions, and similar usage of "rich" and "lean" fuel split schedules, one at high loads and the other at lower load / turndown conditions, for each of the remaining fuel nozzle rings of the combustion system,

A method is also provided for tuning a premixed combustion system, such as that disclosed above, whereby there exists one or more annular rings of fuel nozzles (of same or different type, controlled by an circumferential fuel split affecting circumferential distribution of fuel within each fuel nozzle ring), whereby a second family of fuel splits may be available (if more than one annular ring of fuel nozzles exists) which adjusts the relative (radial) amount of fuel to each of the radially concentric fuel nozzle rings (ring 1, ring 2, etc.), utilizing two modes of operation: a "lean minor circuit ring 1" subset of the ring 1 fuel nozzles whereby the f/a ratio of this ring 1 fuel nozzle subset is less than the f/a ratio of the remaining fuel nozzles of ring 1, and a "rich minor circuit ring 1" subset of the ring 1 fuel nozzles whereby the f/a ratio of this outer fuel nozzle subset is greater than the f/a ratio of the remaining fuel nozzles of ring 1, The method first comprises the step of determining if the current mode of operation is utilizing either a "lean minor circuit ring 1" or "rich minor circuit ring 1" mode of operation, making a similar determination of the current mode of operation, either "rich" or "lean" minor fuel circuit operation, for each of the remaining fuel nozzle rings of the combustion system, Once these determinations are made, the method comprises the step of adjusting, via the tuning controller 10 and selected operational control element, Fuel Circuit Split 1 and/or Fuel Circuit Split 2 in the proper direction, when a tuning issue exists. The direction of adjustment is determined based on which mode of operation is being utilized at the current operating conditions.

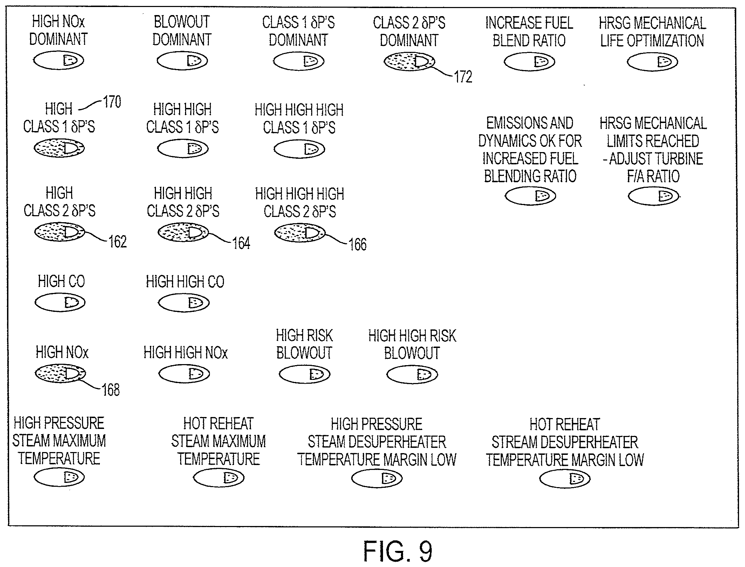

Figs, 9-12 provide exemplary visual representations of the autotuning system interface depicting how the Boolean Logic Hierarchy works in practice, Fig. 9 shows the alarms returned in connection with the example set forth above with respect to Fig, 8, Namely, alarms are returned for Class 2 8P's at the levels of H 162, HH 164 and HHH 166, In addition, alarms for NOx 168 and Class 1 δP's 170 are returned at the H level. Since more extreme levels trump conflicts of different alarms at the same level, the HHH Class 2 δP's is the priority and therefore the dominant tuning concern 172,

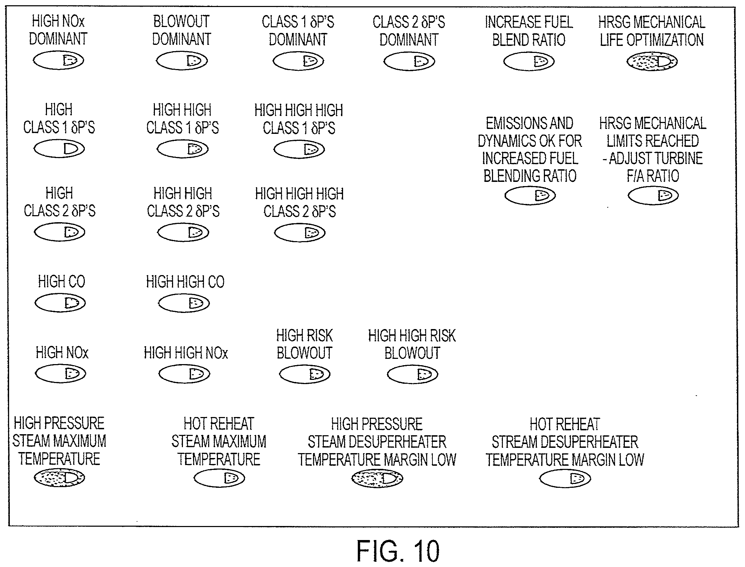

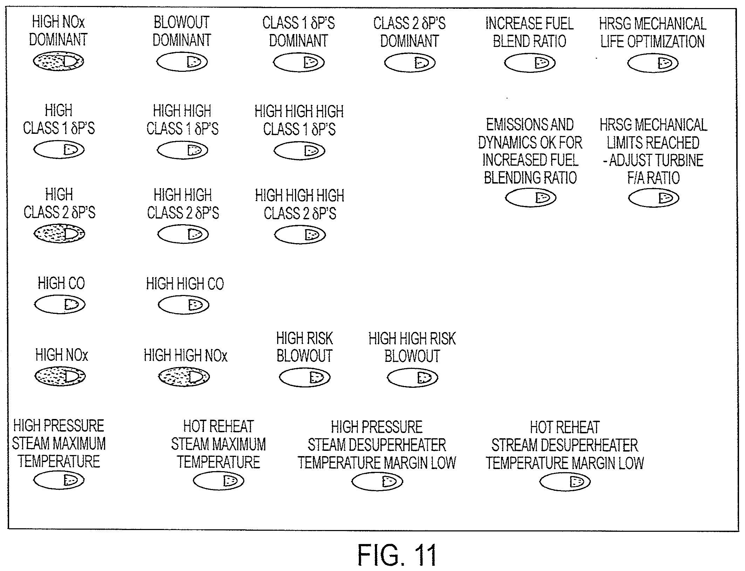

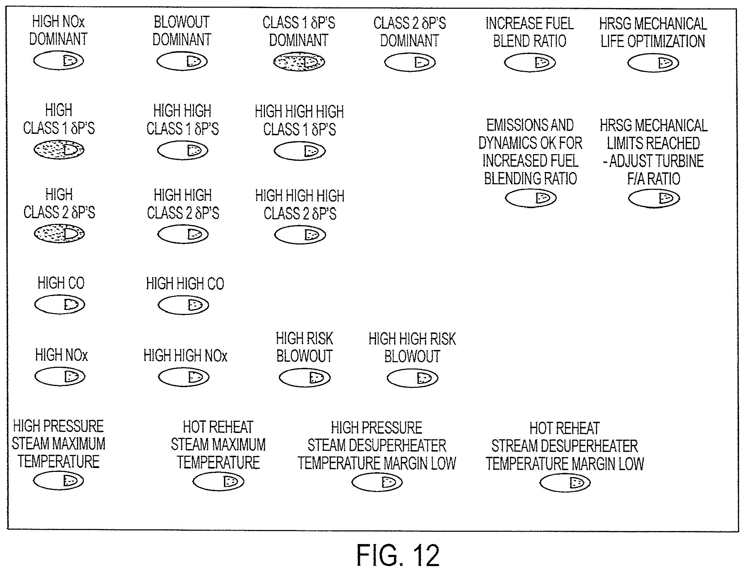

Figs, 10-12 show various further examples of the dominant tuning concern for different "True" alarm levels under the user defined hierarchy 144 of Fig, 8. Fig. 10 shows high pressure steam at maximum operating temperature and the high pressure steam desuperheater at saturation conditions (placing water into the steam pipe), with no other alarms active, Thus, HRSG Mechanical Life Optimization is the dominant tuning concern, Fig. 11 shows a Class 2δP's at an H level, with NOx at both an H and HH condition, thus making High NOx as the dominant tuning concern, Finally, Fig. 12 shows both Class 1 δP's and Class 2 δP's at the H level. Referring to the user ranking of dominant tuning issues 144 in Fig, 8, Class 1 δP's is ranked as a priority above Class 2 δP's and thus, although the severity of the alarms is equal, Class 1 δP's becomes the dominant tuning concern,

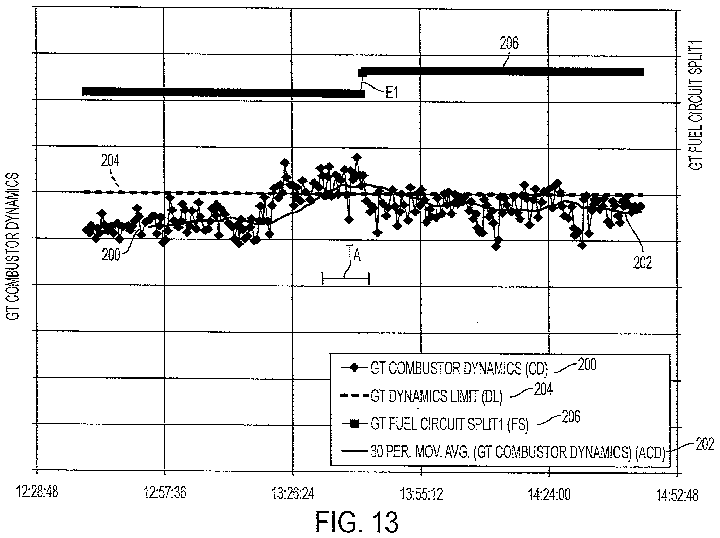

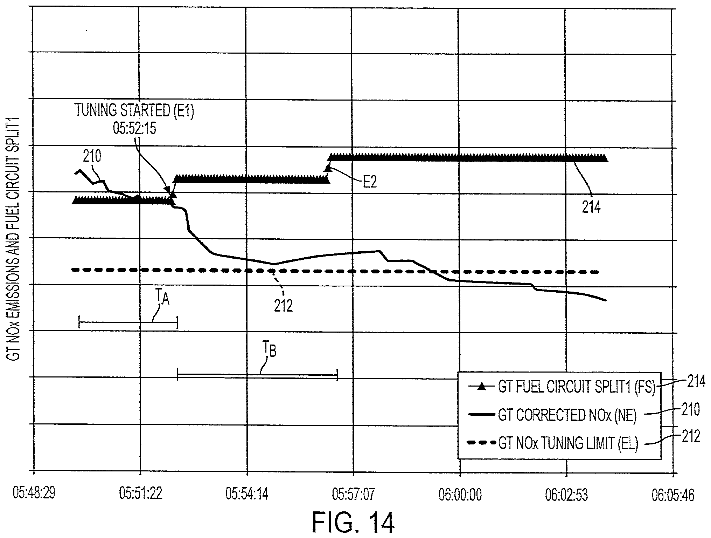

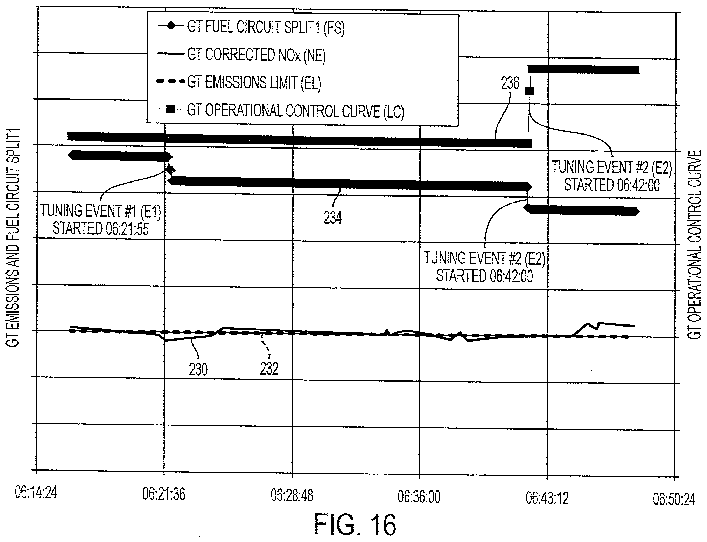

In Figs. 13 -16, there is shown various examples of the operational results of a tuning operation of a tuning controller of the present disclosure based on operational data from a running turbine system, In Fig. 13, the dominant tuning concern is high Class 2 δP's, and a change in the combustor fuel split E1 is made in reaction to a high Class 2 δP's alarm generated when the combustor dynamics moves outside of the set operational priorities for optimum dynamics. The actual combustor dynamics data received by the turbine controller 10 from, for example, the CDMS 50 is designated as 200 in the graph, The moving average for the combustor dynamics is identified in the graph as 202. When the combustor dynamics exceed the dynamics alarm limit value 204 for a set period of time TA an alarm goes off within the tuning controller, This alarm causes the first event E1 and a resulting incremental adjustment in the combustor fuel split tuning parameter 206, As illustrated, the incremental increase in the fuel split causes a corresponding drop in the combustor dynamics 200, with the average combustor dynamics 202 dropping below the dynamics alarm limit 204. As time continues, the tuning is held by the tuning controller and the average combustor dynamics 202 maintains its operational position below the dynamics limit 204, Thus, no further adjustments necessary or alarms issued,

In Fig, 14, the tuning criteria is High NOx emissions, As NOx emissions data 210 is received from the tuning controller, an alarm is generated after the passage of time TA, The alarm is caused by the NOx emissions 210 exceeding the operational standard or tuning limit 212. The alarm activates a first event E1 resulting in an incremental increase in the fuel split 214. After a period of time TB from the first event E1, the NOx alarm is still activated due to the NOx emissions 210 exceeding the preset tuning limit 212, This continued alarm after time TB causes a second event E2 and a second incremental increase in the fuel split value 214. This second increase is equal in magnitude to the first incremental increase, The second event E2 causes the NOx emissions level 210 to drop below the preset limit 212 within the review time period and halts the alarm, As the NOx emissions 210 remains below the limit 212, the fuel split 214 tuning is held and the operation of the turbine continues with the defined operational parameters,

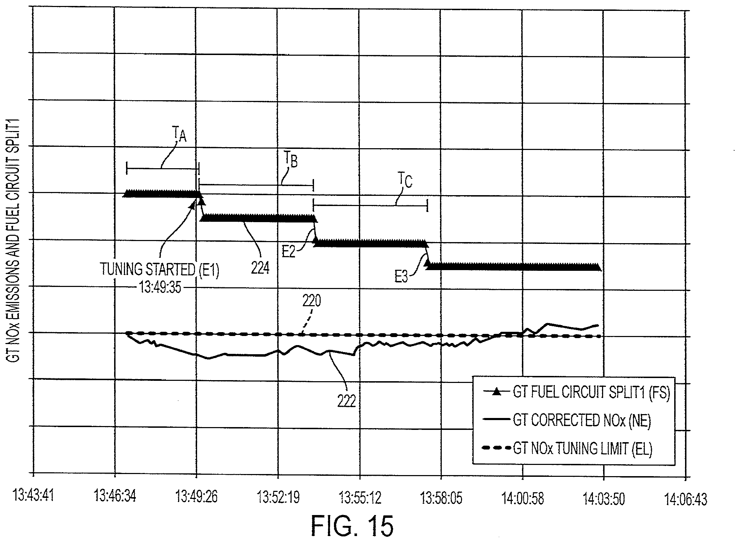

In Fig. 15, the tuning criteria is Blowout, with the alarm created by a low NOx reading received by tuning controller, As shown, the NOx tuning limit 220 is defined. Upon passage of the set time period TA from receiving NOx level data 222, the alarm is generated and a first event E1 occurs, At the first event E1, the fuel split level 224 is incrementally adjusted downward, After a set passage of time TB from event E1 additional NOx emissions data 222 is received and compared to the preset alarm level 220, Because the NOx is still below the alarm level 220, a second event E2 occurs resulting in a further incremental reduction in the fuel split value 224. A further passage of time TC from event E2 occurs and additional data is received. Again, the NOx data 222 is low, maintaining the alarm and resulting in a further event E3. At event E3, the fuel split value 224 is again reduced by the same incremental amount, This third incremental adjustment results in the NOx emissions 222 rising above the preset limit 220 and results in removal of the alarm, The fuel split 224 tuning value set after event E3 is held in place by the tuning controller 10.

In Fig, 16, the tuning criteria is again Blowout, whereby the NOx emissions data 230 received by the tuning controller 10 is again tracking along the lower emissions limit 232. At the first tuning event E1, the fuel split value 234 is incrementally dropped to result in a corresponding increase in the NOx emissions 230 over the lower limit 232, After this first incremental adjustment, the NOx emissions for a period of time holds above the limit 232 and then begins to again fall. At the second tuning event E2, the fuel split value 234 is again adjusted by the designated fixed incremental value. This second adjustment then places the fuel split value 234 at its defined minimum within the preset range of allowable values (determined as a hard coded limit within the tuning controller 10), Because this limit is reached, the tuning operation moves to the next operational parameter, which is normally the second fuel circuit adjustment, In the example provided, this second circuit value (not shown) is already at its set maximum/minimum and is therefore not adjusted, Thus, the tuning operation moves on to the next operational parameter, load control curves 236. As shown, at event E2 an incremental adjustment is made in the load control curve value 236, The increase in the load control curve value 236 results in a corresponding increase in the NOx emission 230 to a value above the minimum 232 and removes the alarm, Upon removal of the alarm, the tuning settings are held and no further adjustments are made, The tuning controller 10 then proceeds to receive data from the sensor means, through the DCS, and continues to make comparisons with the set operational standards (including the minimum NOx emissions limit EL).

The present invention has been described and illustrated with respect to a number of exemplary embodiments thereof, It should be understood by those skilled in the art from the foregoing that various other changes, omissions and additions may be made therein, without departing from the scope of the present invention, with the scope of the present invention being described by the foregoing claims,

## Claims

1. A tuning system for optimizing the mechanical life of a heat recovery steam generator, the heat recovery steam generator being operated in connection with a combustion turbine, **characterized in that** the tuning system comprises:
a tuning controller (10);
sensor means for sensing the operational parameters of a turbine and heat recovery steam generator; and
control means for controlling various operational control elements,
wherein the tuning controller (10) is adapted to tune the operation of the gas turbine in accordance with the following steps:
specifying, by a user, operational priorities for at least one of the heat recovery steam generator or turbine operation, whereby specifying the operational priorities operates to change stored operational standards for the heat recovery steam generator and turbine,
receiving operational parameter data for the operation of the turbine and the heat recovery steam generator from the sensor means, the operational parameter data comprising heat recovery steam generator parameters selected from the group consisting of high pressure steam outlet temperature, hot reheat steam outlet temperature, high pressure intra-stage desuperheater outlet temperature, and hot reheat intra-stage desuperheater outlet temperature,
comparing the operational data to the stored operational standards based on the specified operational priorities to determine if turbine operation conforms to the operational standards and if the heat recovery steam generator parameters conform to allowable margins against over-temperature at steam outlet conditions and over-attemperation at the intra-stage desuperheater,
determining the dominant tuning criteria (106) for non-conforming operation of the heat recovery steam generator and turbine, based on the preset operational priorities,
communicating with the control means to perform a selected adjustment in a first operational control element of the gas turbine,
receiving operational data from the sensor means upon passage of a set period of time to determine if an additional incremental change is desired, and making further adjustments to the selected first operational control element,
selecting a further operational parameter adjustment, different than the first selected operational control element, and
receiving operational data from the sensor means upon passage of a set period of time to determine if an additional incremental change is desired.

2. The system of claim 1, further comprising a distributed control system, whereby the tuning controller (10) communicates with the sensor means and the control means using the distributed control system.

3. The system of claim 1, wherein the operational priorities are selected from the group comprising optimum NOx emissions, optimum power output, optimum combustor dynamics, optimum heat recovery steam generator life, and optimum fuel blend ratio.

4. The system of claim 3, wherein the optimum fuel blend ratio comprises the ratio of non-pipeline quality gas to pipeline quality gas.

5. The system of claim 1, wherein, the selected operational control element adjustment is based on the dominant tuning criteria (106), the selected adjustment having a fixed incremental value and defined range, each incremental change input over a set period of time sufficient for the turbine to gain operational stability.

6. The system of claim 1, wherein the adjustments in the operational control elements of the gas turbine are selected from the group comprising combustor fuel distribution split within the nozzles of the combustor, fuel gas inlet temperature, fuel/air ratio within the turbine, and gas fuel blend ratio (fuel composition).

7. The system of claim 1, wherein the operational priorities comprise optimum heat recovery steam generator life, and wherein adjustment to the fuel-to-air ratio of the turbine is selected as the first operational control element to be adjusted when the selected operational priority is optimum heat recovery steam generator life.

8. The system of claim 1, wherein the tuning controller (10) is adapted to optimizing the mechanical life of the heat recovery steam generator by first adjusting the fuel-to-air ratio operational control element prior to making any tuning adjustments based on remaining operational priorities.

9. The system of claim 8, wherein, after adjustment of the fuel-to-air ratio operational control element, the tuning controller (10) subsequently tunes additional control elements in response to changes in operational parameters of the turbine occurring as the result of adjustment of the fuel-to-air ratio operational control element.

10. The system of claim 1, wherein the operational data are selected from the group further consisting of high pressure intra-stage desuperheater outlet pressures, and hot reheat intra-stage desuperheater outlet pressures.

11. The system of claim 1, wherein the turbine has operational parameters selected from the group consisting of turbine stack emissions and combustion dynamics.

12. A system for controlling the operation of a combustion turbine, the combustion turbine operating in connection with a heat recovery steam generator, **characterized in that** the system comprises:
a tuning controller (10) for storing data related to operation of the turbine and heat recovery steam generator, specifying operational priorities for at least one of the heat recovery steam generator or turbine operation, whereby specifying the operational priorities operates to change stored operational standards for the heat recovery steam generator and turbine, receiving operational data related to the operation of the turbine and heat recovery steam generator, the operational data comprising heat recovery steam generator parameters selected from the group consisting of high pressure steam outlet temperature, hot reheat steam outlet temperature, high pressure intra-stage desuperheater outlet temperature, and hot reheat intra-stage desuperheater outlet temperature, and providing instruction signals related to operation of the turbine and heat recovery steam generator;
sensor means for sensing data related to the operation of the turbine and heat recovery steam generator and communicating the sensed data to the tuning controller (10), wherein the tuning controller compares the comparing the operational data to the stored operational standards based on the specified operational priorities to determine if turbine operation conforms to the operational standards and if the heat recovery steam generator parameters conform to allowable margins against over-temperature at steam outlet conditions and over-attemperation at the intra-stage desuperheater; and
control means for controlling operational control elements of the turbine in response to an instruction signal provided by the tuning controller (10).

13. The system of claim 12, wherein the operational priorities are selected from the group comprising optimum NOx emissions, optimum power output, optimum combustor dynamics, optimum fuel blend ratio, and optimum heat recovery steam generator life.

14. A method of optimizing the mechanical life of a heat recovery steam generator through tuning the operation of a gas turbine, **characterized in that** the method comprises:
providing sensor means for sensing operational parameters of the heat recovery steam generator;
providing control means for controlling operational control elements of the turbine, wherein the control means adjust selected control elements in response to control signals from a tuning controller (10);
providing the tuning controller (10) for specifying operational priorities for at least one of the heat recovery steam generator or turbine operation, whereby the specifying of the operational priority operates to change stored operational standards for the heat recovery steam generator and turbine;
receiving data regarding the operational parameters from the sensor means and sending control signals to the control means, the operational parameters comprising heat recovery steam generator parameters selected from the group consisting of high pressure steam outlet temperature, hot reheat steam outlet temperature, high pressure intra-stage desuperheater outlet temperature, and hot reheat intra-stage desuperheater outlet temperature;
establishing a communication link between the tuning controller (10), the control means and the sensor means;
sensing data regarding operational parameters of the heat recovery steam generator and the turbine and transmitting the sensed data to the tuning controller (10);
receiving the sensed operational parameter data at the tuning controller (10) and comparing the sensed operational parameter data to the stored operational standards stored in the tuning controller (10) to determine if turbine operation conforms to the operational standards and if the heat recovery steam generator parameters conform to allowable margins against over-temperature at steam outlet conditions and over-attemperation at the intra-stage desuperheater and if adjustment to an operational control element is necessary to improve operating parameters of the turbine or heat recovery steam generator, wherein the preset operational parameter levels are based on operational priorities of the turbine;
communicating, from the tuning controller (10) to the control means, control signals perform a defined incremental adjustment of a first selected operational control element,
after a preset period of time from the adjustment of the first selected operational control element, sensing data regarding operational parameters and transmitting the sensed data to the tuning controller (10) and comparing the sensed operational data to the preset operational parameter levels determine if further adjustments within the operational control means are required,
determining if the first operational control element is able to receive further adjustments and communicating, from the tuning controller (10) to the control means, control signals perform a defined incremental adjustment of a second selected operational control element.

15. The method of claim 14, wherein the first selected control element to be adjusted is the fuel-to-air ratio of the turbine, wherein the adjustment to the fuel-to-air ratio is done in response to operational parameters of the heat recovery steam generator being out of allowable limits when compared to the stored operational standards.

16. A method for tuning a premixed combustion system of a combustion turbine operating in connection with a heat recovery steam generator, the turbine comprising at least one combustor having an outer ring of identical fuel nozzles and an inner fuel nozzle which utilizes an inner nozzle fuel split to adjust the fuel-to-air ratio of the inner to outer nozzles, **characterized in that** the method comprises:
providing a turbine controller (30) programed to operate the premixed combustion system according to at least two distinct modes of operation, the distinct modes comprising a lean inner nozzle mode whereby the fuel-to-air ratio of the inner nozzle is less than the fuel-to-air ratio of the outer fuel nozzles, and a rich inner nozzle mode whereby the fuel-to-air ratio of the inner nozzle is greater than the fuel-to-air ratio of the outer fuel nozzles,
sensing the operating conditions of the turbine, wherein the sensed conditions include high load, low load and turndown; and
operating the premixed combustion system using both the lean inner nozzle mode and the rich inner nozzle mode according to the operating condition of the turbine; wherein modifying the operational mode of the turbine from lean inner nozzle mode to rich inner nozzle mode is done by:
specifying operational priorities for turbine operation from a range of parameters, whereby specifying the operational priorities operates to change stored operational standards for the turbine; and
adjusting the fuel split of the turbine in response to a departure of the operating conditions from the stored operational standards.

17. The method of claim 16, wherein the premixed combustion system is operated at a lean inner nozzle mode during high load conditions and the premixed combustion system is operated at rich inner nozzle mode during low load and turndown conditions.

18. The method of claim 16, wherein the premixed combustion system is operated at a rich inner nozzle mode during high load conditions and the premixed combustion system is operated at lean inner nozzle mode during low load and turndown conditions.

19. A method for tuning a premixed combustion system of a combustion turbine operating in connection with a heat recovery steam generator, the turbine comprising at least one combustor having a ring of outer fuel nozzles whereby the fuel split between selected subsets of the outer fuel nozzles may be adjusted individually and an inner fuel nozzle, **characterized in that** the method comprises:
providing a turbine controller (30) programed to operate the premixed combustion system according to at least two distinct modes of operation, the first mode of operation comprising a lean minor circuit, whereby the fuel-to-air ratio of the outer fuel nozzle subset is less than the fuel-to-air ratio of the remaining outer fuel nozzles, and the second mode of operation comprising a rich minor circuit, whereby the fuel-to-air ratio of this outer fuel nozzle subset is greater than the fuel-to-air ratio of the remaining outer fuel nozzles;
sensing the operating conditions of the turbine, wherein the sensed conditions include high load, low load and turndown; and
operating the premixed combustion system using both the lean inner nozzle mode and the rich inner nozzle mode according to the operating condition of the turbine; wherein modifying the operational mode of the turbine from lean inner nozzle mode to rich inner nozzle mode is done by:
specifying operational priorities for turbine operation from a range of parameters, whereby specifying the operational priorities operates to change stored operational standards for the turbine; and
adjusting the fuel split of the turbine in response to a departure of the operating conditions from the stored operational standards.

20. The method of claim 19, wherein the wherein the premixed combustion system is operated at a lean minor circuit mode during high load conditions and the premixed combustion system is operated at rich minor circuit mode during low load and turndown conditions.

21. The method of claim 19, wherein the wherein the premixed combustion system is operated at a rich minor circuit mode during high load conditions and the premixed combustion system is operated at lean minor circuit mode during low load and turndown conditions.

22. The method of claim 19, further comprising the steps of determining if the current mode of operation is a lean minor circuit or a rich minor circuit and adjusting the selected subset of outer fuel nozzles in the proper direction, when a tuning issue exists, depending on which mode of operation is being utilized at the current operating conditions.

23. The method of claim 19, wherein the turbine comprises a plurality of annular rings of fuel nozzles, whereby the fuel split to each ring may be adjusted based on the operating condition of a turbine, such that the fuel-to-air ratio of a first annular ring of fuel nozzles and a second annular ring of fuel nozzles may be adjusted independently.

24. The method of claim 23, wherein the first annular ring of fuel nozzles may be selectively operated at a higher fuel-to-air ration than the second annular ring of fuel nozzles.

## Patentansprüche

1. Optimierungssystem zum Optimieren der mechanischen Lebensdauer eines Wärmerückgewinnungs-Dampfgenerators, wobei der Wärmerückgewinnungs-Dampfgenerator in Verbindung mit einer Verbrennungsturbine betrieben wird, **dadurch gekennzeichnet, dass** das Optimierungssystem umfasst:
eine Optimierungssteuereinheit (10);
Sensoreinrichtungen zum Erfassen der Betriebsparameter einer Turbine und eines Wärmerückgewinnungs-Dampfgenerators; und
Steuereinrichtungen zum Steuern verschiedener Betriebssteuerungselemente,
wobei die Optimierungssteuereinheit (10) ausgelegt ist, den Betrieb der Gasturbine gemäß den folgenden Schritten zu optimieren:
Festlegen, durch einen Benutzer, von Betriebsprioritäten für mindestens einen aus dem Wärmerückgewinnungs-Dampfgenerator- oder dem Turbinenbetrieb, wodurch das Festlegen der Betriebsprioritäten bewirkt, Betriebsstandards für den Wärmerückgewinnungs-Dampfgenerator und die Turbine zu verändern,
Empfangen von Betriebsparameterdaten für den Betrieb der Turbine und des Wärmerückgewinnungs-Dampfgenerators von den Sensoreinrichtungen, wobei die Betriebsparameterdaten Wärmerückgewinnungs-Dampfgeneratorparameter umfassen, ausgewählt aus der Gruppe, bestehend aus Hochdruckdampfauslasstemperatur, Auslasstemperatur des heißen Zwischenüberhitzungsdampfes, Auslasstemperatur des stufeninternen Hochdruckenthitzers und Auslasstemperatur des stufeninternen Enthitzers der heißen Zwischenüberhitzung,
Vergleichen der Betriebsdaten mit den gespeicherten Betriebsstandards auf Grundlage der festgelegten Betriebsprioritäten, um zu bestimmen, ob der Turbinenbetrieb den Betriebsstandards entspricht, und ob die Wärmerückgewinnungs-Dampfgeneratorparameter zulässigen Grenzwerten hinsichtlich Übertemperatur bei Dampfauslassbedingungen und Übertemperierung beim stufeninternen Enthitzer entsprechen,
Bestimmen der dominanten Optimierungskriterien (106) für fehlerhaften Betrieb des Wärmerückgewinnungs-Dampfgenerators und der Turbine auf Grundlage der vorgegebenen Betriebsprioritäten,
Kommunizieren mit den Steuereinrichtungen zum Durchführen einer ausgewählten Justierung in einem ersten Betriebssteuerungselement der Gasturbine,
Empfangen von Betriebsdaten von den Sensoreinrichtungen nach Ablauf eines festgelegten Zeitraums, um zu bestimmen, ob eine zusätzliche inkrementelle Änderung erwünscht ist, und Vornehmen weiterer Justierungen an dem ausgewählten ersten Betriebssteuerungselement,
Auswählen einer weiteren Betriebsparameterjustierung, verschieden von dem ersten ausgewählten Betriebssteuerungselement, und
Empfangen von Betriebsdaten von den Sensoreinrichtungen nach Ablauf eines festgelegten Zeitraums, um zu bestimmen, ob eine zusätzliche inkrementelle Änderung erwünscht ist.

2. System nach Anspruch 1, weiter umfassend ein verteiltes Steuerungssystem, wodurch die Optimierungssteuereinheit (10) mit den Sensoreinrichtungen und den Steuereinrichtungen unter Verwendung des verteilten Steuerungssystems kommuniziert.

3. System nach Anspruch 1, wobei die Betriebsprioritäten ausgewählt sind aus der Gruppe, umfassend optimale NOx-Emissionen, optimale Leistungsabgabe, optimale Verbrennerdynamik, optimale Lebensdauer des Wärmerückgewinnungs-Dampfgenerators und optimales Brennstoffmischverhältnis.

4. System nach Anspruch 3, wobei das optimale Brennstoffmischverhältnis das Verhältnis von Gas in Nicht-Pipelinequalität und Gas in Pipelinequalität umfasst.

5. System nach Anspruch 1, wobei die ausgewählte Betriebssteuerungselementjustierung auf den dominanten Optimierungskriterien (106) beruht, die ausgewählte Justierung einen festen Inkrementwert und definierten Bereich aufweist und jede inkrementelle Änderung über einen festgelegten Zeitraum eingegeben wird, der ausreicht, damit die Turbine Betriebsstabilität erlangt.

6. System nach Anspruch 1, wobei die Justierungen in den Betriebssteuerungselementen der Gasturbine ausgewählt sind aus der Gruppe, umfassend die Aufteilung der Brennstoffverteilung innerhalb der Düsen des Brenners, die Brenngaseinlasstemperatur, das Brennstoff-Luft-Verhältnis in der Turbine und das Brenngasmischverhältnis (die Brennstoffzusammensetzung).

7. System nach Anspruch 1, wobei die Betriebsprioritäten eine optimale Lebensdauer des Wärmerückgewinnungs-Dampfgenerators umfassen, und wobei eine Justierung des Brennstoff-Luft-Verhältnisses der Turbine als das erste zu justierende Betriebssteuerungselement ausgewählt wird, wenn die ausgewählte Betriebspriorität die optimale Lebensdauer des Wärmerückgewinnungs-Dampfgenerators ist.

8. System nach Anspruch 1, wobei die Optimierungssteuereinheit (10) ausgelegt ist auf das Optimieren der mechanischen Lebensdauer des Wärmerückgewinnungs-Dampfgenerators, indem zuerst das Brennstoff-Luft-Verhältnis-Betriebssteuerungselement justiert wird, bevor beliebige Optimierungsjustierungen auf Grundlage der übrigen Betriebsprioritäten vorgenommen werden.

9. System nach Anspruch 8, wobei nach dem Justieren des Brennstoff-Luft-Verhältnis-Betriebssteuerungselements die Optimierungssteuereinheit (10) anschließend Steuerelemente als Reaktion auf Änderungen von Betriebsparametern der Turbine optimiert, die als Ergebnis des Justierens des Brennstoff-Luft-Verhältnis-Betriebssteuerungselements auftreten.

10. System nach Anspruch 1, wobei die Betriebsdaten ausgewählt werden aus der Gruppe, die weiter besteht aus Auslassdrücken des stufeninternen Hochdruckenthitzers und Auslassdrücken des stufeninternen Enthitzers der heißen Zwischenüberhitzung.

11. System nach Anspruch 1, wobei die Turbine Betriebsparameter aufweist, ausgewählt aus der Gruppe, bestehend aus Turbinen-Abgasemissionen und Verbrennungsdynamik.

12. System zum Steuern des Betriebs einer Verbrennungsturbine, wobei die Verbrennungsturbine in Verbindung mit einem Wärmerückgewinnungs-Dampfgenerator betrieben wird, **dadurch gekennzeichnet, dass** das System umfasst:
eine Optimierungssteuereinheit (10) zum Speichern von Daten bezüglich des Betriebs der Turbine und des Wärmerückgewinnungs-Dampfgenerators, Festlegen von Betriebsprioritäten für mindestens einen aus dem Wärmerückgewinnungs-Dampfgenerator- oder dem Turbinenbetrieb, wodurch das Festlegen der Betriebsprioritäten bewirkt, dass die gespeicherten Betriebsstandards für den Wärmerückgewinnungs-Dampfgenerator und die Turbine geändert werden, Empfangen von Betriebsdaten bezüglich des Betriebs der Turbine und des Wärmerückgewinnungs-Dampfgenerators, wobei die Betriebsdaten Wärmerückgewinnungs-Dampfgeneratorparameter umfassen, ausgewählt aus der Gruppe, bestehend aus Hochdruckdampfauslasstemperatur, Auslasstemperatur des heißen Zwischenüberhitzungsdampfes, Auslasstemperatur des stufeninternen Hochdruckenthitzers und Auslasstemperatur des stufeninternen Enthitzers der heißen Zwischenüberhitzung, und Vorsehen von Anweisungssignalen bezüglich des Betriebs der Turbine und des Wärmerückgewinnungs-Dampfgenerators;
Sensoreinrichtungen zum Erfassen von Daten bezüglich des Betriebs der Turbine und des Wärmerückgewinnungs-Dampfgenerators und Kommunizieren der erfassten Daten zur Optimierungssteuereinheit (10), wobei die Optimierungssteuereinheit das Vergleichen der Betriebsdaten mit den gespeicherten Betriebsstandards auf Grundlage der festgelegten Betriebsprioritäten vergleicht, um zu bestimmen, ob der Turbinenbetrieb den Betriebsstandards entspricht, und ob die Wärmerückgewinnungs-Dampfgeneratorparameter den zulässigen Grenzwerten hinsichtlich Übertemperatur bei Dampfauslassbedingungen und Übertemperierung beim stufeninternen Enthitzer entsprechen; und
Steuereinrichtungen zum Steuern von Betriebssteuerungselementen der Turbine als Reaktion auf ein durch die Optimierungssteuereinheit (10) gegebenes Anweisungssignal.

13. System nach Anspruch 12, wobei die Betriebsprioritäten ausgewählt sind aus der Gruppe, umfassend optimale NOx-Emissionen, optimale Leistungsabgabe, optimale Verbrennerdynamik, optimales Brennstoffmischverhältnis und optimale Lebensdauer des Wärmerückgewinnungs-Dampfgenerators.

14. Verfahren zum Optimieren der mechanischen Lebensdauer eines Wärmerückgewinnungs-Dampfgenerators durch ein Optimieren des Betriebs einer Gasturbine, **dadurch gekennzeichnet, dass** das Verfahren umfasst:
Bereitstellen von Sensoreinrichtungen zum Erfassen von Betriebsparametern des Wärmerückgewinnungs-Dampfgenerators;
Bereitstellen von Steuereinrichtungen zum Steuern von Betriebssteuerungselementen der Turbine, wobei die Steuereinrichtungen ausgewählte Steuerungselemente als Reaktion auf Steuersignale von einer Optimierungssteuereinheit (10) justieren;
Bereitstellen der Optimierungssteuereinheit (10) zum Festlegen von Betriebsprioritäten für mindestens einen aus dem Wärmerückgewinnungs-Dampfgenerator- oder dem Turbinenbetrieb, wodurch das Festlegen der Betriebsprioritäten bewirkt, Betriebsstandards für den Wärmerückgewinnungs-Dampfgenerator und die Turbine zu verändern;
Empfangen von Daten hinsichtlich der Betriebsparameter von den Sensoreinrichtungen und Senden von Steuersignalen zu den Steuereinrichtungen, wobei die Betriebsparameter Wärmerückgewinnungs-Dampfgeneratorparameter umfassen, ausgewählt aus der Gruppe, bestehend aus Hochdruckdampfauslasstemperatur, Auslasstemperatur des heißen Zwischenüberhitzungsdampfes, Auslasstemperatur des stufeninternen Hochdruckenthitzers und Auslasstemperatur des stufeninternen Enthitzers der heißen Zwischenüberhitzung;
Herstellen einer Kommunikationsverbindung zwischen der Optimierungssteuereinheit (10), den Steuereinrichtungen und den Sensoreinrichtungen;
Erfassen von Daten hinsichtlich Betriebsparametern des Wärmerückgewinnungs-Dampfgenerators und der Turbine und Senden der erfassten Daten an die Optimierungssteuereinheit (10);
Empfangen der erfassten Betriebsparameterdaten bei der Optimierungssteuereinheit (10) und Vergleichen der erfassten Betriebsparameterdaten mit den in der Optimierungssteuereinheit (10) gespeicherten Betriebsstandards, um zu bestimmen, ob der Turbinenbetrieb den Betriebsstandards entspricht, und ob die Wärmerückgewinnungs-Dampfgeneratorparameter den zulässigen Grenzwerten hinsichtlich Übertemperatur bei Dampfauslassbedingungen und Übertemperierung beim stufeninternen Enthitzer entsprechen, und ob eine Justierung an einem Betriebssteuerungselement notwendig ist, um Betriebsparameter der Turbine oder des Wärmerückgewinnungs-Dampfgenerators zu verbessern, wobei die voreingestellten Betriebsparameterpegel auf Betriebsprioritäten der Turbine beruhen;
Kommunizieren, von der Optimierungssteuereinheit (10) zu den Steuereinrichtungen, von Steuersignalen, die eine definierte inkrementelle Justierung eines ersten ausgewählten Betriebssteuerungselements durchführen,
nach einem vorgegebenen Zeitraum vom Justieren des ersten ausgewählten Betriebssteuerungselements Erfassen von Daten hinsichtlich Betriebsparametern und Senden der erfassten Daten an die Optimierungssteuereinheit (10) und Vergleichen der erfassten Betriebsdaten mit den voreingestellten Betriebsparameterpegeln, um zu bestimmen, ob weitere Justierungen innerhalb der Betriebssteuereinrichtungen erforderlich sind,
Bestimmen, ob das erste Betriebssteuerungselement in der Lage ist, weitere Justierungen zu empfangen, und Kommunizieren, von der Optimierungssteuereinheit (10) zu den Steuereinrichtungen, von Steuersignalen, die eine definierte inkrementelle Justierung eines zweiten ausgewählten Betriebssteuerungselements durchführen.

15. Verfahren nach Anspruch 14, wobei das zu justierende erste ausgewählte Steuerungselement das Brennstoff-Luft-Verhältnis der Turbine ist, wobei das Justieren als Reaktion darauf durchgeführt wird, dass die Betriebsparameter des Wärmerückgewinnungs-Dampfgenerators außerhalb zulässiger Grenzwerte liegen, verglichen mit den gespeicherten Betriebsstandards.

16. Verfahren zum Optimieren eines Vormisch-Verbrennungssystems einer Verbrennungsturbine, die in Verbindung mit einem Wärmerückgewinnungs-Dampfgenerator arbeitet, wobei die Turbine mindestens einen Verbrenner mit einem Außenring identischer Brennstoffdüsen und mit einer inneren Brennstoffdüse aufweist, der eine innere Brennstoffaufteilung verwendet, um das Brennstoff-Luft-Verhältnis der inneren Düse zu den äußeren Düsen zu justieren, **dadurch gekennzeichnet, dass** das Verfahren umfasst:
Bereitstellen einer Turbinensteuereinheit (30), programmiert, das Vormisch-Verbrennungssystem gemäß mindestens zwei verschiedenen Betriebsmodi zu betreiben, wobei die verschiedenen Modi umfassen: einen mageren Innendüsenmodus, wodurch das Brennstoff-Luft-Verhältnis der inneren Düse geringer ist als das Brennstoff-Luft-Verhältnis der äußeren Brennstoffdüsen, und einen fetten Innendüsenmodus, wodurch das Brennstoff-Luft-Verhältnis der inneren Düse größer ist als das Brennstoff-Luft-Verhältnis der äußeren Brennstoffdüsen,
Erfassen der Betriebsbedingungen der Turbine, wobei die erfassten Bedingungen hohe Last, niedrige Last und Teillastbetrieb enthalten; und
Betreiben des Vormisch-Verbrennungssystems unter Verwendung sowohl des mageren Innendüsenmodus als auch des fetten Innendüsenmodus gemäß den Betriebsbedingungen der Turbine; wobei das Ändern des Betriebsmodus der Turbine vom mageren Innendüsenmodus zum fetten Innendüsenmodus erfolgt durch:
Festlegen von Betriebsprioritäten für den Turbinenbetrieb aus einem Bereich von Parametern, wodurch das Festlegen der Betriebsprioritäten bewirkt, dass gespeicherte Betriebsstandards für die Turbine geändert werden; und
Justieren der Brennstoffaufteilung der Turbine als Reaktion auf ein Abweichen der Betriebsbedingungen von den gespeicherten Betriebsstandards.

17. Verfahren nach Anspruch 16, wobei das Vormisch-Verbrennungssystem bei einem mageren Innendüsenmodus während Hochlastbedingungen betrieben wird, und das Vormisch-Verbrennungssystem bei einem fetten Innendüsenmodus während Niedriglast- und Teillastbedingungen betrieben wird.

18. Verfahren nach Anspruch 16, wobei das Vormisch-Verbrennungssystem bei einem fetten Innendüsenmodus während Hochlastbedingungen betrieben wird, und das Vormisch-Verbrennungssystem bei einem mageren Innendüsenmodus während Niedriglast- und Teillastbedingungen betrieben wird.

19. Verfahren zum Optimieren eines Vormisch-Verbrennungssystems einer Verbrennungsturbine, die in Verbindung mit einem Wärmerückgewinnungs-Dampfgenerator arbeitet, wobei die Turbine mindestens einen Verbrenner mit einem Ring äußerer Brennstoffdüsen, wodurch die Brennstoffaufteilung zwischen ausgewählten Untermengen der äußeren Brennstoffdüsen einzeln justiert werden kann, und mit einer inneren Brennstoffdüse umfasst, **dadurch gekennzeichnet, dass** das Verfahren umfasst:
Bereitstellen einer Turbinensteuereinheit (30), programmiert, das Vormisch-Verbrennungssystem gemäß mindestens zwei verschiedenen Betriebsmodi zu betreiben, wobei der erste Betriebsmodus einen mageren Nebenkreis umfasst, wodurch das Brennstoff-Luft-Verhältnis der äußeren Brennstoffdüsenuntermenge geringer ist als das Brennstoff-Luft-Verhältnis der übrigen äußeren Brennstoffdüsen, und der zweite Betriebsmodus einen fetten Nebenkreis umfasst, wodurch das Brennstoff-Luft-Verhältnis dieser äußeren Brennstoffdüsenuntermenge größer ist als das Brennstoff-Luft-Verhältnis der übrigen äußeren Brennstoffdüsen;
Erfassen der Betriebsbedingungen der Turbine, wobei die erfassten Bedingungen hohe Last, niedrige Last und Teillastbetrieb enthalten; und
Betreiben des Vormisch-Verbrennungssystems unter Verwendung sowohl des mageren Innendüsenmodus als auch des fetten Innendüsenmodus gemäß den Betriebsbedingungen der Turbine; wobei das Ändern des Betriebsmodus der Turbine vom mageren Innendüsenmodus zum fetten Innendüsenmodus erfolgt durch:
Festlegen von Betriebsprioritäten für den Turbinenbetrieb aus einem Bereich von Parametern, wodurch das Festlegen der Betriebsprioritäten bewirkt, dass gespeicherte Betriebsstandards für die Turbine geändert werden; und
Justieren der Brennstoffaufteilung der Turbine als Reaktion auf ein Abweichen der Betriebsbedingungen von den gespeicherten Betriebsstandards.

20. Verfahren nach Anspruch 19, wobei das Vormisch-Verbrennungssystem bei einem mageren Nebenkreismodus während Hochlastbedingungen betrieben wird und das Vormisch-Verbrennungssystem bei einem fetten Nebenkreismodus während Niedriglast- und Teillastbedingungen betrieben wird.

21. Verfahren nach Anspruch 19, wobei das Vormisch-Verbrennungssystem bei einem fetten Nebenkreismodus während Hochlastbedingungen betrieben wird und das Vormisch-Verbrennungssystem bei einem mageren Nebenkreismodus während Niedriglast- und Teillastbedingungen betrieben wird.

22. Verfahren nach Anspruch 19, weiter umfassend die Schritte des Bestimmens, ob der aktuelle Modus ein magerer Nebenkreis oder ein fetter Nebenkreis ist, und des Justierens der ausgewählten Untermenge von äußeren Brennstoffdüsen in der richtigen Richtung, wenn ein Optimierungsproblem besteht, abhängig davon, welcher Betriebsmodus bei den aktuellen Betriebsbedingungen verwendet wird.

23. Verfahren nach Anspruch 19, wobei die Turbine eine Vielzahl von Ringen von Brennstoffdüsen umfasst, wodurch die Brennstoffaufteilung auf jeden Ring auf Grundlage der Betriebsbedingungen einer Turbine justiert werden kann, sodass das Brennstoff-Luft-Verhältnis eines ersten Rings von Brennstoffdüsen und eines zweiten Rings von Brennstoffdüsen unabhängig justiert werden kann.

24. Verfahren nach Anspruch 23, wobei der erste Ring von Brennstoffdüsen wahlweise bei einem höheren Brennstoff-Luft-Verhältnis betrieben werden kann als der zweite Ring von Brennstoffdüsen.

## Revendications

1. Système de réglage pour optimiser la durée mécanique d'un générateur de vapeur à récupération de chaleur, le générateur de vapeur à récupération de chaleur étant exploité en liaison avec une turbine à combustion, **caractérisé en ce que** le système de réglage comprend :
un contrôleur de réglage (10) ;
des moyens de capteurs pour détecter les paramètres opérationnels d'une turbine et d'un générateur de vapeur à récupération de chaleur ; et
des moyens de commande pour commander divers éléments de commande opérationnelle,
dans lequel le contrôleur de réglage (10) est adapté pour régler le fonctionnement de la turbine à gaz conformément aux étapes suivantes :
spécifier, par un utilisateur, des priorités opérationnelles pour le fonctionnement de l'un au moins du générateur de vapeur à récupération de chaleur ou de la turbine, sachant que la spécification des priorités opérationnelles a pour effet de modifier des normes opérationnelles stockées pour le générateur de vapeur à récupération de chaleur et la turbine,
recevoir des données de paramètres opérationnels pour le fonctionnement de la turbine et du générateur de vapeur à récupération de chaleur à partir des moyens de capteurs, les données de paramètres opérationnels comprenant des paramètres du générateur de vapeur à récupération de chaleur sélectionnés dans le groupe constitué par la température de sortie de la vapeur à haute pression, la température de sortie de la vapeur de réchauffage chaude, la température de sortie du désurchauffeur intra-étage à haute pression et la température de sortie du désurchauffeur intra-étage de réchauffage chaud,
comparer les données opérationnelles avec les normes opérationnelles stockées sur la base des priorités opérationnelles spécifiées afin de déterminer si le fonctionnement de la turbine est conforme aux normes opérationnelles et si les paramètres du générateur de vapeur à récupération de chaleur sont conformes à des marges admissibles contre la surchauffe aux conditions à la sortie de la vapeur et la désurchauffe excessive au désurchauffeur intra-étage,
déterminer le critère de réglage dominant (106) pour le fonctionnement non conforme du générateur de vapeur à récupération de chaleur et de la turbine sur la base des priorités opérationnelles prédéfinies,
communiquer avec les moyens de commande pour effectuer un réglage sélectionné dans un premier élément de commande opérationnelle de la turbine à gaz,
recevoir des données opérationnelles des moyens de capteurs au terme d'une période de temps définie pour déterminer si une modification incrémentielle supplémentaire est souhaitée, et réaliser d'autres ajustements sur le premier élément de commande opérationnelle sélectionné,
sélectionner un autre réglage de paramètres opérationnels, différent du premier élément de commande opérationnelle sélectionné, et
recevoir des données opérationnelles des moyens de capteurs au terme d'une période de temps définie pour déterminer si une modification incrémentielle supplémentaire est souhaitée.

2. Système selon la revendication 1, comprenant en outre un système à commande décentralisée, dans lequel le contrôleur de réglage (10) communique avec les moyens de capteur et les moyens de commande en utilisant le système de contrôle décentralisé.

3. Système selon la revendication 1, dans lequel les priorités opérationnelles sont sélectionnées dans le groupe comprenant les émissions optimales de NOx, la puissance fournie optimale, la dynamique optimale de la chambre de combustion, la durée de vie optimale du générateur de vapeur à récupération de chaleur et le rapport de mélange optimal de combustibles.

4. Système selon la revendication 3, dans lequel le rapport de mélange optimal de combustibles comprend le rapport entre le gaz de qualité non-pipeline et le gaz de qualité pipeline.

5. Système selon la revendication 1, dans lequel le réglage d'élément de commande opérationnelle sélectionné est basé sur le critère de réglage dominant (106), le réglage sélectionné ayant une valeur incrémentielle fixe et une plage définie, chaque modification incrémentielle étant introduite sur une période de temps définie suffisante pour que la turbine gagne en stabilité opérationnelle.

6. Système selon la revendication 1, dans lequel les réglages des éléments de commande opérationnelle de la turbine à gaz sont sélectionnés dans le groupe comprenant la division de la distribution de combustible de chambre de combustion dans les injecteurs de la chambre de combustion, la température d'admission du gaz combustible, le rapport combustible/air dans la turbine et le rapport de mélange gaz/combustible (composition du combustible).

7. Système selon la revendication 1, dans lequel les priorités opérationnelles comprennent la durée de vie optimale du générateur de vapeur à récupération de chaleur, et dans lequel l'ajustement du rapport combustible/air de la turbine est sélectionné en tant que le premier élément de commande opérationnelle à ajuster lorsque la priorité opérationnelle sélectionnée est la durée de vie optimale du générateur de vapeur à récupération de chaleur.

8. Système selon la revendication 1, dans lequel le contrôleur de réglage (10) est adapté pour optimiser la durée mécanique du générateur de vapeur à récupération de chaleur en réglant d'abord l'élément de commande opérationnelle du rapport combustible/air avant d'effectuer tout ajustement de réglage sur la base des priorités opérationnelles résiduelles.

9. Système selon la revendication 8, dans lequel, après le réglage de l'élément de commande opérationnelle du rapport combustible/air, le contrôleur de réglage (10) règle ensuite des éléments de commande supplémentaires en réponse à des variations des paramètres opérationnels de la turbine qui se produisent en tant que le résultat du réglage de l'élément de commande opérationnelle du rapport combustible/air.

10. Système selon la revendication 1, dans lequel les données opérationnelles sont sélectionnées dans le groupe comprenant en outre les pressions de sortie du désurchauffeur intra-étage à haute pression et les pressions de sortie du désurchauffeur intra-étage de réchauffage chaud.

11. Système selon la revendication 1, dans lequel la turbine a des paramètres opérationnels sélectionnés dans le groupe constitué par les émissions de cheminée de la turbine et la dynamique de combustion.

12. Système pour commander le fonctionnement d'une turbine de combustion, la turbine de combustion fonctionnant en liaison avec un générateur de vapeur à récupération de chaleur, **caractérisé en ce que** le système comprend :
un contrôleur de réglage (10) pour stocker des données relatives au fonctionnement de la turbine et du générateur de vapeur à récupération de chaleur, spécifiant des priorités opérationnelles pour le fonctionnement de l'un au moins du générateur de vapeur à récupération de chaleur ou de la turbine, sachant que la spécification des priorités opérationnelles a pour effet de modifier des normes opérationnelles stockées pour le générateur de vapeur à récupération de chaleur et la turbine, recevoir des données opérationnelles relatives au fonctionnement de la turbine et du générateur de vapeur à récupération de chaleur, les données opérationnelles comprenant des paramètres du générateur de vapeur à récupération de chaleur sélectionnés dans le groupe constitué par la température de sortie de la vapeur à haute pression, la température de sortie de la vapeur de réchauffage chaude, la température de sortie du désurchauffeur intra-étage à haute pression et la température de sortie du désurchauffeur intra-étage à réchauffage à chaud, et fournir des signaux d'instruction liés au fonctionnement de la turbine et du générateur de vapeur à récupération de chaleur ;
des moyens de capteurs pour détecter les données relatives au fonctionnement de la turbine et du générateur de vapeur à récupération de chaleur et communiquer les données détectées au contrôleur de réglage (10), sachant que le contrôleur de réglage compare les données opérationnelles avec les normes opérationnelles stockées sur la base des priorités opérationnelles spécifiées afin de déterminer si le fonctionnement de la turbine est conforme aux normes opérationnelles et si les paramètres du générateur de vapeur à récupération de chaleur sont conformes à des marges admissibles contre la surchauffe aux conditions à la sortie de la vapeur et la désurchauffe excessive au désurchauffeur intra-étage ; et
des moyens de commande pour commander des éléments de commande opérationnelle de la turbine en réponse à un signal d'instruction fourni par le contrôleur de réglage (10).

13. Système selon la revendication 12, dans lequel les priorités opérationnelles sont sélectionnées dans le groupe comprenant les émissions optimales de NOx, la puissance fournie optimale, la dynamique optimale de la chambre de combustion, le rapport de mélange optimal de combustibles et la durée de vie optimale du générateur de vapeur à récupération de chaleur.

14. Procédé pour optimiser la durée mécanique d'un générateur de vapeur à récupération de chaleur par le réglage du fonctionnement d'une turbine à gaz, **caractérisé en ce que** le procédé comprend :
fournir des moyens de capteurs pour détecter des paramètres opérationnels du générateur de vapeur à récupération de chaleur ; et
fournir des moyens de commande pour commander des éléments de commande opérationnelle de la turbine, sachant que les moyens de commande règlent des éléments de commande sélectionnés en réponse à des signaux de commande provenant d'un contrôleur de réglage (10) ;
fournir le contrôleur de réglage (10) pour spécifier des priorités opérationnelles pour le fonctionnement de l'un au moins du générateur de vapeur à récupération de chaleur ou de la turbine, sachant que la spécification des priorités opérationnelles a pour effet de modifier des normes opérationnelles stockées pour le générateur de vapeur à récupération de chaleur et la turbine ;
recevoir des données relatives aux paramètres opérationnels depuis les moyens de capteurs et envoyer des signaux de commande aux moyens de commande, les paramètres opérationnels comprenant des paramètres du générateur de vapeur à récupération de chaleur sélectionnés dans le groupe constitué par la température de sortie de la vapeur à haute pression, la température de sortie de la vapeur de réchauffage chaude, la température de sortie du désurchauffeur intra-étage à haute pression et la température de sortie du désurchauffeur intra-étage de réchauffage chaud ;
établir un lien de communication entre le contrôleur de réglage (10), les moyens de commande et les moyens de capteur ;
détecter des données concernant les paramètres opérationnels du générateur de vapeur à récupération de chaleur et de la turbine et transmettre les données détectées au contrôleur de réglage (10) ;
recevoir les données de paramètres opérationnels détectés au contrôleur de réglage (10) et comparer les données de paramètres opérationnels détectés avec les normes opérationnelles stockées dans le contrôleur de réglage (10) afin de déterminer si le fonctionnement de la turbine est conforme aux normes opérationnelles et si les paramètres du générateur de vapeur à récupération de chaleur sont conformes à des marges admissibles contre la surchauffe aux conditions à la sortie de la vapeur et la désurchauffe excessive au désurchauffeur intra-étage et si un ajustement à un élément de commande opérationnelle est nécessaire pour améliorer les paramètres opérationnels de la turbine ou du générateur de vapeur à récupération de chaleur, dans lequel les niveaux de paramètres opérationnels préréglés sont basés sur des priorités opérationnelles de la turbine ;
communiquer, depuis le contrôleur de réglage (10) aux moyens de commande, des signaux de commande qui effectuent un ajustement incrémentiel défini d'un premier élément de commande opérationnelle sélectionné,
après une période de temps prédéfinie à partir du réglage du premier élément de commande opérationnelle sélectionné, détecter des données concernant les paramètres opérationnels et transmettre les données détectées au contrôleur de réglage (10) et comparer les données opérationnelles détectées avec les niveaux de paramètres opérationnels prédéfinis pour déterminer si des réglages supplémentaires sont nécessaires au sein des moyens de commande opérationnelle,
déterminer si le premier élément de commande opérationnelle est capable de recevoir des réglages supplémentaires et communiquer, depuis le contrôleur de réglage (10) aux moyens de commande, des signaux de commande qui effectuent un ajustement incrémentiel défini d'un second élément de commande opérationnelle sélectionné.

15. Procédé selon la revendication 14, dans lequel le premier élément de commande sélectionné devant être ajusté est le rapport combustible/air de la turbine, dans lequel l'ajustement du rapport combustible/air est effectué en réponse à des paramètres opérationnels du générateur de vapeur à récupération de chaleur qui sont en dehors de limites admissibles lorsqu'ils sont comparés aux normes opérationnelles stockées.

16. Procédé pour régler un système de combustion à prémélange d'une turbine à combustion fonctionnant en liaison avec un générateur de vapeur à récupération de chaleur, la turbine comprenant au moins une chambre de combustion ayant un anneau extérieur d'injecteurs de combustible identiques et un injecteur de combustible intérieur qui utilise une division de combustible d'injecteur intérieur pour régler le rapport combustible/air des injecteurs intérieur et extérieurs, **caractérisé en ce que** le procédé comprend :
fournir un contrôleur (30) de turbine programmé pour faire fonctionner le système de combustion à prémélange selon au moins deux modes de fonctionnement distincts, les modes distincts comprenant un mode d'injecteur intérieur pauvre dans lequel le rapport combustible/air de l'injecteur intérieur est inférieur au rapport combustible/air des injecteurs de combustible extérieurs, et un mode d'injecteur intérieur riche dans lequel le rapport combustible/air de l'injecteur intérieur est supérieur au rapport combustible/air des injecteurs de combustible extérieurs,
détecter les conditions de fonctionnement de la turbine, sachant que les conditions détectées comprennent une charge élevée, une charge faible et une réduction de charge ; et
faire fonctionner le système de combustion à prémélange en utilisant à la fois le mode d'injecteur intérieur pauvre et le mode d'injecteur intérieur riche selon les conditions de fonctionnement de la turbine ; dans lequel la modification du mode de fonctionnement de la turbine du mode d'injecteur intérieur pauvre au mode d'injecteur intérieur riche est effectuée par :
spécifier de priorités opérationnelles pour le fonctionnement de la turbine à partir d'un ensemble de paramètres, la spécification des priorités opérationnelles ayant pour effet de modifier des normes opérationnelles stockées pour la turbine ; et
ajustement de la division de combustible de la turbine en réponse à une déviation des conditions de fonctionnement par rapport aux normes opérationnelles stockées.

17. Procédé selon la revendication 16, dans lequel le système de combustion à prémélange est exploité en mode d'injecteur intérieur pauvre dans des conditions de forte charge et le système de combustion à prémélange est exploité en mode d'injecteur intérieur riche dans des conditions de faible charge et de réduction.

18. Procédé selon la revendication 16, dans lequel le système de combustion à prémélange est exploité en mode d'injecteur intérieur riche dans des conditions de forte charge et le système de combustion à prémélange est exploité en mode d'injecteur intérieur pauvre dans des conditions de faible charge et de réduction.

19. Procédé pour régler un système de combustion à prémélange d'une turbine à combustion fonctionnant en liaison avec un générateur de vapeur à récupération de chaleur, la turbine comprenant au moins une chambre de combustion ayant un anneau d'injecteurs de combustible extérieurs, dans lequel la division du combustible entre des sous-ensembles sélectionnés des injecteurs de combustibles extérieurs peut être ajustée individuellement, et un injecteur de combustible intérieur, **caractérisé en ce que** le procédé comprend :
fournir un contrôleur (30) de turbine programmé pour faire fonctionner le système de combustion à prémélange selon au moins deux modes de fonctionnement distincts, le premier mode de fonctionnement un circuit mineur pauvre, dans lequel le rapport combustible/air du sous-ensemble d'injecteurs de combustible extérieurs est inférieur au rapport combustible/air des injecteurs de combustible extérieurs résiduels, et le second mode de fonctionnement comprend un circuit mineur riche, dans lequel le rapport combustible/air de ce sous-ensemble d'injecteurs de combustible extérieurs est supérieur au rapport combustible/air des injecteurs de combustible extérieurs résiduels ;
détecter les conditions de fonctionnement de la turbine, sachant que les conditions détectées comprennent une charge élevée, une charge faible et une réduction de charge ; et
faire fonctionner le système de combustion à prémélange en utilisant à la fois le mode d'injecteur intérieur pauvre et le mode d'injecteur intérieur riche selon les conditions de fonctionnement de la turbine ; dans lequel la modification du mode de fonctionnement de la turbine du mode d'injecteur intérieur pauvre au mode d'injecteur intérieur riche est effectuée par :
spécifier de priorités opérationnelles pour le fonctionnement de la turbine à partir d'un ensemble de paramètres, la spécification des priorités opérationnelles ayant pour effet de modifier des normes opérationnelles stockées pour la turbine ; et
ajustement de la division de combustible de la turbine en réponse à une déviation des conditions de fonctionnement par rapport aux normes opérationnelles stockées.

20. Procédé selon la revendication 19, dans lequel le système de combustion à prémélange est exploité en mode de circuit mineur pauvre dans des conditions de forte charge et le système de combustion à prémélange est exploité en mode de circuit mineur riche dans des conditions de faible charge et de réduction.

21. Procédé selon la revendication 19, dans lequel le système de combustion à prémélange est exploité en mode de circuit mineur riche dans des conditions de forte charge et le système de combustion à prémélange est exploité en mode de circuit mineur pauvre dans des conditions de faible charge et de réduction.

22. Procédé selon la revendication 19, comprenant en outre les étapes consistant à déterminer si le mode de fonctionnement actuel est un circuit mineur pauvre ou un circuit mineur riche, et à ajuster le sous-ensemble sélectionné d'injecteurs de combustibles extérieurs dans la direction appropriée, lorsqu'il existe un problème de réglage, en fonction du mode de fonctionnement qui est utilisé dans les conditions de fonctionnement actuelles.

23. Procédé selon la revendication 19, dans lequel la turbine comprend une pluralité d'anneaux annulaires d'injecteurs de combustible, dans lequel la division du combustible vers chaque anneau peut être ajustée sur la base des conditions de fonctionnement d'une turbine, de sorte que le rapport combustible/air d'un premier anneau annulaire d'injecteurs de combustible et d'un second anneau annulaire d'injecteurs de combustible puisse être ajusté indépendamment.

24. Procédé selon la revendication 23, dans lequel le premier anneau annulaire d'injecteurs de combustible peut être sélectivement exploité à un rapport combustible/air plus élevé que celui du second anneau annulaire d'injecteurs de combustible.
